# EUROPÄISCHE PATENTANMELDUNG

(11) **EP 4 711 156 A2**
(43) Veröffentlichungstag der Anmeldung: **18.03.2026**
(21) Anmeldenummer: 25185426.1
(22) Anmeldetag: 26.06.2025
(51) Int. Cl.: B60D 1/62, B60L 50/53, B60L 50/64, B60L 53/80

(54) **BETRIEBSEINRICHTUNG FÜR EINEN FAHRZEUGANHÄNGER**

(30) Priorität: 23.07.2024 DE 202024104125 U
(71) Anmelder: Alois Kober GmbH, 89359 Kötz (DE)
(72) Erfinder: UHL, Stefan, 89312 Günzburg (DE); GUTJAHR, Pavel Vilacis, 89356 Haldenwang (DE); ZACHARIAS, Georg, 86156 Augsburg (DE); ZIMMERMANN, Maximillian, 89522 Heidenheim (DE)
(74) Vertreter: ERNICKE Patent- und Rechtsanwälte PartmbB

(57) **Zusammenfassung**

Die Erfindung betrifft eine Betriebseinrichtung (3) und ein Betriebsverfahren für einen straßengängigen Fahrzeuganhänger (1), wobei die Betriebseinrichtung (3) eine Rangiereinrichtung (4) für den abgekuppelten Fahrzeuganhänger (1) mit mehreren elektrisch betriebenen Rangierantrieben (19,19',20,20') zum Antreiben der Anhängerräder (10,10') und eine gemeinsame, von den Rangierantrieben (19,19',20,20') örtlich getrennte, elektrische Stromversorgung (22) sowie eine Steuereinheit (23) für die Rangierantriebe (19,19',20,20') umfasst. Die Rangierantriebe (19,19',20,20') weisen jeweils einen Kabelanschluss (25) für den Anschluss einer von der Stromversorgung (22) kommenden externen kabelgebundenen Stromzuführung (26) auf und sind für einen Betrieb mit einer Gleichspannung von mehr als 12V, insbesondere ca. 18V oder mehr, ausgelegt. Die Stromversorgung (22) umfasst ein oder mehrere elektrische Ladegeräte (34,35) und/oder ein oder mehrere elektrische Akkuhalter (57) ohne elektrische Ladefunktion, die jeweils eine elektrisch leitende und einen mechanischen Rückhalt bietende Aufnahme (40,41) für zumindest einen mobilen, lösbar anzuordnenden elektrischen Akku (38,39) aufweisen, wobei die ein oder mehreren elektrischen Ladegeräte (34,35) und/oder elektrischen Akkuhalter (57) und Akku(s) (38,39) für eine Gleichspannung von mehr als 12V, insbesondere ca. 18V oder mehr, ausgelegt sind und wobei die ein oder mehreren elektrischen Ladegeräte (34,35) und/oder elektrischen Akkuhalter (57) zumindest einen Versorgungsausgang (37) für eine kabelgebundene Stromzuführung (26) zu den Rangierantrieben (19,19',20,20') aufweisen und die ein oder mehreren elektrischen Ladegeräte (34,35) einen Ladeanschluss (36) für eine anhängerseitige Stromzuleitung (13,14) aufweisen. Die Steuereinheit (23) ist dazu ausgebildet, die kabelgebundene Stromzuführung (26) von der Stromversorgung (22) zu den Rangierantrieben (19,19',20,20') zu beschalten und die Rangierantriebe (19,19',20,20') zu steuern.

## Beschreibung

Die Erfindung betrifft eine Betriebseinrichtung umfassend eine Rangiereinrichtung für einen straßengängigen Fahrzeuganhänger mit den Merkmalen im Oberbegriff des Hauptanspruchs. Sie betrifft ferner ein Betriebsverfahren und einen straßengängigen Fahrzeuganhänger.

Eine solche Betriebseinrichtung für einen straßengängigen Fahrzeuganhänger ist aus der EP 2 409 903 A1 bekannt. Sie umfasst eine Rangiereinrichtung für den abgekuppelten Fahrzeuganhänger mit mehreren elektrisch betriebenen Rangierantrieben zum Antreiben der Anhängerräder, eine von den externen Rangierantrieben örtlich getrennt im Rohr einer Quertraverse unter dem Fahrzeuganhänger angeordnete elektrische Stromversorgung mit einer einzelnen wiederaufladbaren Batterie mit einer Spannung von mehr als 12V sowie eine Steuereinheit für die Rangierantriebe. Die Rangierantriebe sind für eine Spannung von mehr als 12V ausgelegt und sind jeweils direkt über Stromkabel ausschließlich mit der einen Batterie verbunden. Die Steuereinheit ist separat an die Batterie angeschlossen. Sie ist über einen Datenbus mit den Rangierantrieben verbunden und steuert nur deren Bewegungen. Die Batterie, die Steuereinheit, die Rangierantriebe und die Leitungen sind bewusst komplett außerhalb des Fahrzeugaufbaus angeordnet.

Die EP 2 722 262 A2 zeigt eine andere Betriebseinrichtung für einen straßengängigen Fahrzeuganhänger. Die Rangierantriebe haben Kabelanschlüsse für Stromkabel einer von der Stromversorgung kommenden elektrischen Stromzuführung. Die Stromversorgung umfasst eine wiederaufladbare elektrische Batterie, die eine übliche Spannung von 12V hat.

Die DE 10 2021 003 702 B3 zeigt eine Betriebseinrichtung für einen straßengängigen Anhänger mit einer Rangiereinrichtung und außenseitig am Chassis angeordneten Rangierantrieben, an denen jeweils ein wechselbarer elektrischer Akku kontaktiert und montiert ist. Der wechselbare Akku kann auch entfernt und für andere Zwecke eingesetzt werden.

Es ist Aufgabe der vorliegenden Erfindung, eine verbesserte Betriebstechnik für einen straßengängigen Anhänger aufzuzeigen.

Die Erfindung löst diese Aufgabe mit den Merkmalen in den selbstständigen Ansprüchen.

Die Erfindung hat verschiedene Vorteile. Die beanspruchte Betriebstechnik, d.h. die Betriebseinrichtung, der damit ausgerüstete Fahrzeuganhänger und das Betriebsverfahren, haben verschiedene Vorteile.

Die Rangierantriebe können mit einer gemeinsamen elektrischen Stromversorgung versorgungstechnisch über eine kabelgebundene Stromzuführung verbunden werden. Die Stromversorgung kann örtlich getrennt von den extern am Chassis des Fahrzeuganhänger anzuordnenden Rangierantrieben angeordnet werden. Sie kann insbesondere geschützt in oder an dem Fahrzeuganhänger, insbesondere in dessen Aufbau untergebracht werden.

Die Rangierantriebe können für einen Betrieb mit einer Gleichspannung von mehr als 12V, insbesondere mit ca. 18V oder mehr, ausgelegt werden. Dies hat Vorteile für die Verringerung der über die kabelgebundene Stromzuführung fließenden Ströme und der Verluste. Die Rangierantriebe können bei der höheren Spannung von z.B. ca. 18V oder 36V effizienter betrieben werden. Sie sind allerdings trotz Auslegung auf die höhere Spannung auch mit einer niedrigeren Spannung von z.B. 12V und mit geringerer Leistung betreibbar.

Dies ist günstig, falls die elektrische Stromversorgung eine weitere wiederaufladbare Batterie mit niedriger Gleichspannung von z.B. 12V umfasst und diese ebenfalls die elektrischen Rangierantriebe versorgen kann. Durch die Auslegung der Rangierantriebe und ihre Eignung zum Betrieb mit unterschiedlichen Gleichspannungen werden die Einsatzmöglichkeiten der Rangiereinrichtung und der Betriebseinrichtung vergrößert. Die Stromversorgung kann mehrere verschiedene Spannungsquellen mit unterschiedlichen Betriebsspannungen umfassen.

Die elektrische Stromversorgung kann ein oder mehrere elektrische Ladegeräte mit einer elektrisch leitenden und einer mechanischen, Rückhalt bietenden Aufnahme für zumindest einen mobilen, lösbar anzuordnenden elektrischen Akku umfassen. Die Aufnahmen können z.B. als Steckaufnahmen mit Führungs- und Klemmleisten sowie Elektrokontakten ausgebildet sein, die den Akku formschlüssig lösbar halten und in Steckstellung eine Stromverbindung zum Ladegerät herstellen, über welche der Akku bei Rangierfahrt etc. entladen und auch wieder aufgeladen werden kann.

Die elektrische Stromversorgung kann alternativ oder zusätzlich ein oder mehrere elektrische Akkuhalter ohne elektrische Ladefunktion umfassen, welche die gleichen Aufnahmen für die gleichen Akkus wie die elektrischen Ladegeräte aufweisen können. Die ein oder mehreren Akkus können dann ggf. auf andere Weise und an anderer Stelle wiederaufgeladen werden, z.B. über separate Ladeeinheiten.

Die ein oder mehreren elektrischen Ladegeräte und/oder die ein oder mehrere elektrische Akkuhalter sowie die ein oder mehreren Akkus können analog zu den Rangierantrieben für eine Gleichspannung von mehr als 12V, insbesondere ca. 18V, 36V oder mehr, ausgelegt werden. Die ein oder mehreren elektrischen Ladegeräte können zumindest einen Ladeanschluss für eine anhängerseitige Stromzuleitung und zumindest einen Versorgungsausgang für die kabelgebundene Stromzuführung zu den Rangierantrieben aufweisen. Die ein oder mehreren elektrischen Akkuhalter können ebenfalls einen solchen Versorgungsausgang haben.

Diese Ausgestaltung hat den Vorteil, dass die kabelgebundene Stromzuführung zwischen den ein oder mehreren Ladegeräten und/oder elektrischen Akkuhaltern sowie den jeweiligen zugeordneten Rangierantrieben verlegt werden kann. Die Rangierantriebe werden dadurch von den ein oder mehreren elektrischen Ladegeräten und/oder elektrischen Akkuhaltern mit Strom versorgt, wobei die elektrische Energie aus den ein oder mehreren mobilen elektrischen Akkus und ggf. aus einer oder mehreren anhängerseitigen Stromzuleitungen kommen kann.

Die ein oder mehreren mobilen elektrischen Akkus können als Spannungsquelle zum Fahren und Rangieren des vom Zugfahrzeug und auch meist von anhängerseitigen Stromzuleitungen abgekuppelten Fahrzeuganhängers benutzt werden. Sie können dabei von den Rangierantrieben örtlich getrennt angeordnet werden. Die ein oder mehreren mobilen elektrischen Akkus können somit in einer geschützten Umgebung untergebracht werden. Andererseits können die akkubetriebenen Rangierantriebe schlanker sowie kompakter bauen und haben eine kleinere Störkontur. Sie bieten auch mehr Bodenfreiheit.

Über die ein oder mehreren anhängerseitigen Stromzuleitungen und den zumindest einen Ladeanschluss können die ein oder mehreren elektrischen Akkus in einem elektrischen Ladegerät wieder aufgeladen werden. Sie können aus ihren Aufnahmen der ein oder mehreren elektrischen Ladegeräte und/oder elektrischen Akkuhalter bei Nichtbenutzung der Rangierantriebe entnommen und an anderen elektrischen Geräten und deren Aufnahmen angeordnet, insbesondere angesteckt, werden, z.B. an Elektrowerkzeugen. Andererseits können an den ein oder mehreren Ladegeräten bedarfsweise auch andere weitere derartige mobile elektrische Akkus aufgeladen werden. Die Betriebseinrichtung hat hierdurch eine besonders hohe energietechnische Flexibilität und ermöglicht andererseits einen hocheffizienten Betrieb der Rangierantriebe.

Für die Ausgestaltung und Anordnung der elektrischen Ladegeräte und/oder elektrischen Akkuhalter sowie der mobilen elektrischen Akkus gibt es verschiedene Möglichkeiten. Ein elektrisches Ladegerät und/oder ein elektrischer Akkuhalter kann eine oder mehrere Aufnahmen für jeweils einen oder mehrere mobile elektrische Akkus aufweisen. Ein elektrisches Ladegerät kann typgebunden für nur einen Akkutyp oder universell sein. Letzteres kann z.B. verschiedene Aufnahmen für verschiedene mobile elektrische Akkus haben, die sich z.B. hinsichtlich der Spannung, der Akku-Form, des Akku-Herstellers oder dgl. unterscheiden. Die ein oder mehreren elektrischen Akkuhalter können entsprechend ausgebildet sein und ggf. mehrere verschiedene Aufnahmen haben.

Die elektrische Stromversorgung umfasst bevorzugt mehrere, insbesondere zwei oder vier, elektrische Ladegeräte und/oder elektrische Akkuhalter mit jeweils zumindest einem aufgenommenen, insbesondere formschlüssig eingesteckten, mobilen elektrischen Akku. Hierbei kann jedes Ladegerät und/oder jeder elektrische Akkuhalter über einen eigenen Versorgungsausgang und eine eigene kabelgebundene Stromzuführung mit den jeweils zugeordneten ein oder mehreren Rangierantrieben verbunden sein. Das eine Ladegerät und/oder der eine elektrische Akkuhalter kann z.B. einen oder zwei Rangierantriebe an der einen Chassisseite und das andere Ladegerät und/oder der andere elektrische Akkuhalter kann ein oder zwei Rangierantriebe an der anderen Chassisseite mit elektrischem Strom versorgen. Die Zahl der elektrischen Ladegeräte und/oder elektrischen Akkuhalter ist bevorzugt ein ganzzahliges Vielfaches von 2, kann aber auch anders sein.

In Abwandlung hierzu ist es möglich, dass die elektrische Stromversorgung nur ein einzelnes elektrisches Ladegerät und/oder einen einzelnen elektrischen Akkuhalter mit nur einer oder mit mehreren Aufnahmen für einen oder mehrere mobile elektrische Akkus umfasst. Das elektrische Ladegerät und/oder der elektrische Akkuhalter kann einen einzelnen Versorgungsausgang haben, wobei eine gemeinsame elektrische kabelgebundene Stromzuführung zu mehreren Rangierantrieben vorhanden ist. Dies können z.B. ein oder mehrere linke und ein oder mehrere rechte Rangierantriebe sein. Ein elektrisches Ladegerät und/oder ein elektrischer Akkuhalter kann auch mehrere getrennte Versorgungsausgänge haben.

Die elektrische Stromzuführung kann kabelgebundene Stromleitungen umfassen. Diese können Bestandteil der Betriebseinrichtung sein, was aber nicht zwingend ist. Die Stromleitungen können auch nutzerseitig beigestellt werden. Die kabelgebundenen Stromleitungen können herstellerseitig bei der Betriebseinrichtung bereits an den Komponenten der Betriebseinrichtung angebracht sein. Sie können auch erst bei der Installation am Fahrzeuganhänger angebaut werden. Die Rangierantriebe weisen jeweils einen Kabelanschluss auf, der diese Varianten ermöglicht. Der Kabelanschluss ist für den Anschluss von solche externen kabelgebundenen Stromleitungen konzipiert. Er unterscheidet sich hierdurch von internen Stromanschlüssen von Rangierantrieben mit einem integralen und ggf. mobilen elektrischen Akku.

Die Betriebseinrichtung kann auch eine gesteuert elektrisch betätigbare, insbesondere antreibbare, Stützenanordnung zur Abstützung des bevorzugt abgekuppelten Fahrzeuganhängers umfassen. Diese Stützenanordnung kann ebenfalls an die elektrische Stromversorgung und an die Steuereinheit angeschlossen werden. Die Steuereinheit und die Stromversorgung können dadurch eine Multifunktionalität erhalten.

Die Steuereinheit ist bevorzugt als elektrische und speicherprogrammierbare Steuereinheit ausgebildet. Sie kann einen Mikroprozessor oder eine andere Recheneinheit, Daten- und Programmspeicher sowie Input- und Output-Schnittstellen umfassen. Diese können auf einer Platine angeordnet sein. Die Input- und Output-Schnittstellen können mehrere getrennte elektrische Anschlüsse umfassen.

Die Betriebseinrichtung kann gemäß eines weiteren, selbstständigen Erfindungsaspekts nur die gesteuert antreibbare Stützenanordnung (ohne Rangierantriebe) und die beanspruchte elektrische Stromversorgung nebst Steuereinheit umfassen.

Ferner ist es möglich, dass die Betriebseinrichtung ein oder mehrere Nebenaggregate umfasst. Dies können z.B. ein Kühlschrank, eine Lüftungseinrichtung, eine Heiz- oder Klimaanlage oder dgl. sein. Die ein oder mehreren Nebenaggregate können in oder an dem Fahrzeuganhänger untergebracht werden. Sie können ebenfalls an die elektrische Stromversorgung und/oder die elektrische Steuereinheit angeschlossen sein, z.B. über einen Speiseausgang.

Die Betriebseinrichtung und die elektrische Stromversorgung kann eine weitere, bevorzugt wiederaufbladbare, elektrische Batterie umfassen. Dies kann z.B. eine übliche 12V-Batterie sein.

Die elektrische Steuereinheit kann die ein oder mehreren elektrischen Ladegeräte und/oder die ein oder mehreren elektrischen Akkuhalter und die ggf. weitere Batterie beschalten. Sie kann wahlweise die elektrischen Rangierantriebe mit Strom von den ein oder mehreren elektrischen Ladegeräten oder von der weiteren Batterie beaufschlagen.

Die Steuereinheit kann die mehreren getrennten elektrischen Anschlüsse für die ein oder mehreren elektrischen Ladegeräte und/oder für die ein oder mehreren elektrischen Akkuhalter und für eine ggf. vorhandene weitere elektrische, bevorzugt wiederaufladbare, Batterie aufweisen. Dies können z.B. Steck- oder Klemmanschlüsse und Eingänge für Stromleitungen von dem/den elektrischen Ladegerät(en) und/oder von dem/den elektrischen Akkuhalter(n) und von der ggf. vorhandenen weiteren elektrischen Batterie sein. Die Steuereinheit kann auch bevorzugt mehrere elektrische Anschlüsse für die Rangierantriebe und ggf. die Stützenanordnung aufweisen. Dies können z.B. Steck- oder Klemmanschlüsse und Ausgänge für kabelgebundene Stromleitungen zu den Rangierantrieben und ggf. der Stützenanordnung sein. Die Anschlüsse können auf der besagten Platine angeordnet sein.

Die weitere elektrische Batterie kann z.B. fahrzeugseitig bereits vorhanden sein und kann bei einer Nachrüstung einer Rangiereinrichtung und ggf. einer Stützenanordnung oder auch von Nebenaggregaten in deren Versorgung mit elektrischem Strom eingebunden werden. Dies kann langfristig eine Elektroversorgung sichern. Falls die eine mehreren mobilen elektrischen Akkus leerlaufen und momentan nicht wieder aufgeladen werden können, kann von der meistens kapazitätsstarken weiteren Batterie eine Versorgung der besagten elektrischen Verbraucher mit elektrischer Energie weiterhin sichergestellt werden. Dies ist auch günstig, wenn vorhandene elektrische Verbraucher, insbesondere Nebenaggregate, auf eine solche übliche Versorgungsspannung von 12V ausgelegt sind.

Die beanspruchte Betriebseinrichtung, insbesondere die Rangiereinrichtung und die ein oder mehreren elektrischen Ladegeräte und/oder ein oder mehreren elektrischen Akkuhalter nebst ein oder mehreren elektrischen mobilen Akkus können bei der Herstellung und Erstausrüstung eines Fahrzeuganhängers eingebaut werden. Hierbei kann auch eine weitere Batterie eingebaut werden. Andererseits können die Rangierantriebe und die ein oder mehreren elektrischen Ladegeräte und/oder ein oder mehreren elektrischen Akkuhalter nebst ein oder mehreren mobilen elektrischen Akkus an einem Fahrzeuganhänger nachgerüstet oder umgerüstet werden. Hierbei kann eine eventuell vorhandene weitere Batterie beibehalten oder getauscht werden. Sie kann auch entfallen.

Eine Erstausrüstung oder Nachrüstung ist auch bei der Stützenanordnung möglich. Dies kann aber auch anhängerseitig bereits vorhanden sein.

In einem weiteren eigenständigen Erfindungsaspekt kann eine Detektionseinrichtung vorhanden sein, die dazu ausgebildet ist, in Anbaustellung der Rangierantriebe am Fahrzeuganhänger automatisch die Zahl, Seitenlage am Chassis und Ausrichtung der einzelnen Rangierantriebe relativ zum jeweils zugeordneten Anhängerrad zu detektieren. Die Seitenlage betrifft die Anordnung links oder rechts am Chassis und die Ausrichtung betrifft die Anordnung vor oder hinter dem zugeordneten Anhängerrad, wobei sich beides definitionsgemäß z.B. auf die Vorwärts-Fahrtrichtung des Fahrzeuganhängers bezieht. Die Detektionseinrichtung kann mit der Steuereinheit verbunden sein. Die Steuereinheit kann das gemeldete Detektionsergebnis zur Steuerung der Betriebseinrichtung benutzen.

Die beanspruchte Betriebseinrichtung kann mit einer solchen Detektionseinrichtung ausgerüstet sein. Die beanspruchte Detektionseinrichtung kann andererseits auch mit anderen konventionellen Betriebseinrichtungen, insbesondere Rangierantrieben, und mit anderen Stromversorgungen eingesetzt werden, die z.B. gemäß der EP 2 722 262 A2 ausgebildet sind. Eine solche Betriebseinrichtung für einen straßengängigen Fahrzeuganhänger kann eine Rangiereinrichtung für den abgekuppelten Fahrzeuganhänger aufweisen, wobei die Rangiereinrichtung mehrere, vorzugsweise zwei oder vier, elektrisch betriebene Rangierantriebe ausgebildet zum Antreiben der Anhängerräder umfasst, wobei die Betriebseinrichtung eine bevorzugt gemeinsame, von den Rangierantrieben ggf. örtlich getrennte, elektrische Stromversorgung und eine Steuereinheit für die Rangierantriebe umfasst. Die Rangierantriebe können jeweils einen Kabelanschluss aufweisen, der für den Anschluss einer von der Stromversorgung kommenden externen kabelgebundenen Stromzuführung ausgebildet ist, was aber nicht zwingend erforderlich ist.

Die Detektionseinrichtung hat den Vorteil, dass die Steuereinheit für jeden der Rangierantriebe automatisch dessen Seitenlage und Ausrichtung als Information erhält. Die Detektionseinrichtung macht einen besonderen Teaching- oder Eingabe-Vorgang entbehrlich.

Die Steuereinrichtung kann dank der Detektionseinrichtung die einzelnen Rangierantriebe entsprechend ihrer Seitenlage und Ausrichtung selektiv ansteuern. Dies ist z.B. wichtig, um die Treib- und Einwirkrichtung des jeweiligen Rangierantriebs auf das zugeordnete Anhängerrad korrekt einzustellen und zu steuern. Dies kann insbesondere die Drehrichtung des Treibmittels des Rangierantriebs, insbesondere seiner Treibrolle, betreffen.

Wenn die Steuereinrichtung und die Rangierantriebe über Steuerleitungen in Form eines Bus-Systems miteinander verbunden sind, kann die Steuereinrichtung den einzelnen Rangierantrieben Busadressen eigenständig zuweisen oder die Rangierantriebe können eigene vorgegebene oder bei der Installation eingebbare Busadressen haben, mit denen sie sich bei der Steuereinrichtung anmelden. Die Busadressen können ebenfalls einen definierten Seitenlagebezug haben, wobei z.B. für Rangierantriebe mit einem vorgegebenen Linksanbau am Chassis und solche mit einem vorgegebenen Rechtsanbau unterschiedliche Busadressen vorgesehen sind.

Die Stromversorgung und bevorzugt die Steuereinheit können für einen Inhouse-Betrieb in einer gegen äußere Umwelteinflüsse geschützten Umgebung ausgebildet sein und eingesetzt werden. Eine solche Umgebung kann insbesondere in einem schützenden Aufbau des Fahrzeuganhängers, z.B. einer Kabine eines Wohnanhängers oder dergleichen, möglich sein. Die Auslegung auf einen Inhouse-Betrieb ermöglicht Kosteneinsparungen und kann für eine höhere Effizienz sorgen. Insbesondere ist ein Schutz gegen Spritzwasser, Wind, Eis oder dgl. wie bei extern an Rangierantrieben fest oder wechselbar angebauten Akkus nicht erforderlich.

Die Steuereinheit kann bei entsprechender Ausbildung die kabelgebundene Stromzuführung von der Stromversorgung zu den Rangierantrieben und ggf. zu der Stützenanordnung oder auch zu dem/den Nebenaggregat(en) beschalten. Die Steuereinheit kann hierfür mehrere interne Schalter aufweisen.

Die Steuereinheit kann getrennt von der Stromversorgung angeordnet sein. Sie kann alternativ in die Stromversorgung integriert sein, z.B. in ein elektrisches Ladegerät und/oder in einen elektrischen Akkuhalter. Die Steuereinheit, insbesondere ihre Platine, kann in einem Gehäuse des elektrischen Ladegerät und/oder des elektrischen Akkuhalters angeordnet sein. Außenseitig an dem Gehäuse kann auch die Aufnahme für die ein oder mehreren elektrischen Akkus angeordnet sein. Eine integrierte Anordnung hat den Vorteil einer Platzersparnis und einfachen Montage sowie Handhabung und Inbetriebnahme.

Eine getrennte Anordnung der Steuereinheit hat den Vorteil, dass eine Steuereinheit in Form eines universellen Steuergeräts mit großer Stückzahl und entsprechend niedrigen Kosten zum Einsatz kommen kann.

Die Steuereinheit kann vorgerüstet sein, um eventuell auch nachträglich verschiedene der genannten Verbraucher, insbesondere eine Stützenanordnung und/oder Nebenaggregate oder dgl., oder auch eine evtl. später nachgerüstete weitere elektrische Batterie anschließen zu können.

Andererseits können die ein oder mehreren elektrischen Ladegeräte und/oder die ein oder mehreren elektrischen Akkuhalter und ggf. die weitere elektrische Batterie mit der Steuereinheit über eine kabelgebundene Stromleitung versorgungstechnisch verbunden sein. Die Steuereinheit kann ihrerseits über kabelgebundene Stromleitungen mit den Rangierantrieben und ggf. mit der Stützenanordnung oder ggf. auch mit ein oder mehreren Nebenaggregaten versorgungstechnisch verbunden sein und diese mit elektrischem Strom versorgen.

Die Steuereinheit kann mit den Rangierantrieben und ggf. mit der Stützenanordnung oder ggf. auch mit ein oder mehreren Nebenaggregaten durch Steuerleitungen steuertechnisch verbunden sein. Die Steuerleitungen können drahtlos oder drahtgebunden sein. Sie können ein Bus-System bilden. Die ein oder mehreren elektrischen Ladegeräte können ihrerseits mit der Steuereinheit durch eine Steuerleitung steuertechnisch verbunden sein. Die Steuereinheit, insbesondere ihre Platine, kann auch Anschlüsse für die Steuerleitungen aufweisen. Die Anschlüsse können zu einem Busanschluss zusammengefasst sein.

HierÜber die Steuerleitung(en) können z.B. die ein oder mehreren elektrischen Ladegeräte akkuschonend angesteuert werden. Sie können z.B. in einen Erhaltungszustand bei längerer Nichtbenutzung oder in einen vollen Ladezustand zum Wiederaufladen entladener elektrischer Akkus geschaltet werden. Ferner kann ein Akkuwechsel erfasst werden, wenn z.B. bevorratete elektrische Akkus aufgeladen werden sollen.

Die Steuereinheit und/oder die Stromversorgung können einen Speiseausgang für ein Nebenaggregat aufweisen. Über den Speiseausgang mit z.B. 12V kann das angeschlossene Nebenaggregat einerseits mit elektrischem Strom versorgt werden. Es kann andererseits bedarfsweise hierüber auch gesteuert werden. Der Speiseausgang kann ebenfalls Anschlüsse der vorgenannten Art für Stromleitungen und Steuerleitung(en), insbesondere Busleitungen, der vorgenannten Art umfassen.

Die Betriebseinrichtung kann eine Überwachungseinrichtung aufweisen, welche die korrekte Funktion der Betriebseinrichtung, insbesondere der Rangiereinrichtung und ggf. der Stützenanordnung, sicherstellt. Die Überwachungseinrichtung kann mit der Steuereinheit verbunden sein. Die Überwachungseinrichtung kann eine Erfassungseinrichtung für Betriebszustände der Betriebseinrichtung und ihrer besagten Komponenten umfassen. Die Steuereinheit kann das gemeldete Erfassungsergebnis zur Steuerung der Betriebseinrichtung benutzen. Hierüber kann z.B. sichergestellt werden, dass die Rangierantriebe erst bei deaktivierter und insbesondere in Ruhestellung eingezogener Stützenanordnung die Anhängeräder antreiben können. Andererseits kann verhindert werden, dass die Stützenanordnung während eines Rangierbetriebs des fahrenden Fahrzeuganhängers aktiviert und zum Boden ausgefahren wird.

Die Erfassungseinrichtung kann eine Sensorik an den Rangierantrieben und/oder eine Sensorik an der Stützenanordnung umfassen. Die jeweilige Sensorik kann in beliebig geeigneter Weise ausgebildet sein. Sie kann ein oder mehrere Sensoren umfassen. Bei den Rangierantrieben können z.B. die Anpresssituation am Fahrzeugrad und/oder die Motorstromaufnahme und/oder die Drehzahl und/oder andere physikalische Parameter erfasst werden. Bei der Stützanordnung kann die Sensorik z.B. einen Ruhe- oder Bewegungszustand der Stützen, eine endseitige Einfahrstellung mit Stützenrückzug oder eine endseitige Ausfahrstellung mit Bodenkontakt oder andere physikalische Parameter einzeln oder in Kombination erfassen.

Die Stützenanordnung kann in unterschiedlicher Weise ausgebildet sein. Sie kann ein oder mehrere hydraulische und/oder mechanische Hubstützen umfassen, die z.B. an einer Achse des Fahrzeuganhängers und/oder am Chassis angebaut werden können oder angebaut sind. Die Stützenanordnung kann alternativ oder zusätzlich ein oder mehrere hydraulische und/oder mechanische Aufbaustützen umfassen, die z.B. an einem Aufbau des Fahrzeuganhängers montiert werden können oder montiert sind.

Die Betriebseinrichtung kann eine bevorzugt mobile Bedieneinrichtung umfassen. Dies kann z.B. eine dedizierte Fernbedienung sein. Diese kann zum Lieferumfang der Betriebseinrichtung gehören. Die Bedieneinrichtung kann auch eine Steuer-App für ein kundenseitiges Smartphone, Tablett oder anderes bevorzugt computerartiges Gerät sein. Die Bedieneinrichtung kann mit der Betriebseinrichtung, insbesondere mit der Steuereinheit, in geeigneter Weise, vorzugsweise drahtlos, kommunizieren. Die Bedieneinrichtung kann universell sein. Hierdurch können die Rangiereinrichtung, aber auch die ggf. vorhandene Stützanordnung und bedarfsweise ein oder mehrere Nebenaggregate gesteuert werden. Die Kommunikation kann bidirektional sein, wobei an der Bedieneinrichtung und deren Anzeige, insbesondere Bildschirm, Befehlsquittierungen, Zustandsmeldungen oder dgl. andere Informationen ausgegeben werden können. Die Bedieneinrichtung kann auch eine oder mehre vorgegebene Eingabemasken für die Eingabe von informativen Daten oder Befehlen, insbesondere Steuerbefehlen, umfassen.

Die elektrischen Rangierantriebe können jeweils eine elektrische Antriebseinheit und eine elektrische Zustelleinrichtung umfassen. Mit der Zustelleinrichtung kann die zugehörige Antriebseinheit an ein Anhängerrad zugestellt werden. Dies kann mit einer linearen oder rotatorischen Zustellbewegung oder einer kombinativen rotatorischen und linearen Zustellbewegung erfolgen. Die Antriebsfunktion und die Zustellfunktion können von der Steuereinheit gesteuert und ggf. geregelt werden, z.B. über eine sensorische Motorstromerfassung und/oder Drehzahlerfassung oder auf andere Weise.

Die Antriebseinheit eines Rangierantriebs kann einen elektrischen Antriebsmotor und ein hiervon gesteuert angetriebenes und zur Einwirkung an einem Anhängerrad ausgebildetes Treibmittel aufweisen. Das Treibmittel kann z.B. eine rotierende Treibwalze sein, die gegen die Lauffläche eines Fahrzeugrads angedrückt werden kann. Das Treibmittel kann auch ein Zahnrad oder dgl. sein, welches formschlüssig und/oder kraftschlüssig auf ein am Anhängerrad montiertes Gegenrad einwirkt. Die Zustelleinrichtung kann eine Zustellführung und einen elektrisch betriebenen Zustellantrieb aufweisen für die besagte Zustellung der Antriebseinheit an ein Anhängerrad umfassen.

Die eingangs genannte Detektionseinrichtung kann z.B. steuertechnische Detektionsmittel und/oder antriebstechnische Detektionsmittel umfassen. Sie ist bevorzugt mit der Steuereinheit verbunden. Die Detektionseinrichtung kann als Hardwaremodul und/oder Softwaremodul ausgebildet sein. Sie kann in die Steuereinheit implementiert sein.

Die steuertechnischen Detektionsmittel können dazu ausgebildet sein, die Zahl und Ausrichtung der einzelnen Rangierantriebe vor oder hinter dem zugeordneten Anhängerrad und ggf. die Seitenlage der einzelnen Rangierantriebe links und rechts am Chassis in der Anbaulage zu detektieren. Die Zahl der Anhängerräder und der Anhängerachsen der Achsanordnung können variieren. Der Fahrzeuganhänger kann eine Einzelachse oder mehrere Anhängerachsen, insbesondere eine Tandemachse, umfassen. Dementsprechend kann auch die Zahl der Rangierantriebe und die Funktion und Anordnung der steuertechnischen Detektionsmittel variieren.

Die steuertechnischen Detektionsmittel können für die Detektion von Zahl und Ausrichtung der einzelnen Rangierantriebe mehrere bevorzugt identifizierbare, insbesondere voneinander getrennte Steuerleitungsknoten, insbesondere Busknoten umfassen. An einem Busknoten sind z.B. Rangierantriebe angeschlossen, die auf Anhängerräder der gleichen Anhängerachse links und rechts am Chassis einwirken. Die Steuerleitungsknoten, insbesondere Busknoten, können getrennt voneinander an der Steuereinheit angeschlossen sein. Die Beschaltung kann auch entsprechend der Zahl der Anhängerachsen erfolgen. Vorzugsweise sind zumindest zwei Steuerleitungsknoten vorhanden. Deren Zahl kann auch höher sein.

Für eine Einzelachse wird nur einer der Steuerleitungsknoten beschaltet. Für eine Doppelachse oder sog. Tandemachse werden z.B. der erste und ein zweiter Steuerleitungsknoten bzw. beide Steuerleitungsknoten beschaltet. Die Steuereinheit kann hierüber die Achsenzahl automatisch unterscheiden. Für eine Einzelachse kann zudem durch die Beschaltung des einen oder des anderen Steuerleitungsknotens unterschieden werden, ob die beiden Rangierantriebe in Vorwärts-Fahrtrichtung vor oder hinter der Einzelachse am Chassis angebaut sind. Die Knotenzuordnung kann definiert werden.

Bei üblichen Doppelachsen oder sog. Tandemachsen sind die beiden Anhängerachsen in Fahrtrichtung eng benachbart, so dass dazwischen kein Platz für Rangierantriebe ist. Die Zahl der Steuerleitungsknoten kann mehr als zwei betragen, was z.B. für drei oder mehr Anhängerachsen und/oder für unüblichere Bauformen von Mehrfachachsen mit einem größeren Achsabstand in Fahrtrichtung und entsprechenden Anbaumöglichkeiten der Rangierantriebe vor oder hinter jeder der Anhängerachsen nützlich ist.

Die steuertechnischen Detektionsmittel können zusätzlich lagegebundene Steueradressen von linken und rechten Rangierantrieben umfassen. Linke Rangierantriebe haben dabei z.B. eine andere Steueradresse bzw. Busadresse als rechte Rangierantriebe. Links und rechts beziehen sich dabei z.B. auf die Anbaulage am Chassis in Vorwärts-Fahrtrichtung gesehen. Wenn Rangierantriebe unspezifisch ausgebildet sind und in jeder Anbaulage und jeder Zuordnung zu einem Anhängerrad eingesetzt werden können, kann eine Vorgabe für die Anbaulage in Form einer Markierung oder dgl. am Rangierantrieb vorhanden sein. Rangierantriebe können auch lagespezifisch ausgebildet sein, wobei z.B. ein Seitenlagebezug links/rechts an eine bestimmte Zuordnung vor oder hinter dem zugehörigen Anhängerrad gekoppelt ist. Bei Änderung dieser Zuordnung kann der Seitenlagebezug wechseln.

Die antriebstechnischen Detektionsmittel können dazu ausgebildet sein, die rotatorische Ausrichtung der einzelnen Rangierantriebe in der Anbaulage zu detektieren. Hierüber kann ein Seitenlagebezug links/rechts detektiert werden, insbesondere in Kombination mit der vorgenannten Detektion von Zahl und Ausrichtung der einzelnen Rangierantriebe vor oder hinter dem zugeordneten Anhängerrad. Die antriebstechnischen Detektionsmittel können steuertechnische Detektionsmittel ergänzen.

Bei der antriebstechnischen Detektion kann insbesondere die Drehlage oben/unten der Rangierantriebe bezüglich einer definierten, insbesondere oberen oder unteren, Bezugsseite, z.B. der Oberseite, der Rangierantriebe detektiert werden. Die antriebstechnischen Detektionsmittel können z.B. einen Beschleunigungssensor umfassen. Dieser kann detektieren, ob die Bezugsseite in der Anbaulage oben oder unten liegt. Alternativ ist eine andere Sensorausbildung möglich.

Die Bezugsseite kann per Definition mit einer Lage des Treibmittels in Fahrtrichtung am Rangierantrieb gekoppelt werden. Wenn die Bezugsseite oben liegt, befindet sich definitionsgemäß z.B. das Treibmittel mit Blick auf die zum Chassis gerichteten Anbauseite an der linken Seite des Rangierantriebs. Die antriebstechnischen Detektionsmittel sind besonders für die besagten unspezifisch ausgebildeten Rangierantriebe von Vorteil.

Die Signale der Detektionsmittel können von der Detektionseinrichtung logisch verknüpft werden. Über die getrennten Steuerleitungsknoten lässt sich z.B. feststellen, ob die an einem einzelnen Steuerleitungsknoten angeschlossenen linken und rechten Rangierantriebe sich in Vorwärts-Fahrtrichtung vor oder hinter einer einzelnen Anhängerachse und ihren Anhängerrädern befinden. Über die Steuerleitungsknoten lässt sich auch feststellen, ob zwei, vier oder mehr Rangierantriebe angebaut und angeschlossen sind. Über die antriebstechnischen Detektionsmittel kann automatisch festgestellt werden, ob ein Rangierantrieb an der linken oder der rechten Chassisseite angebaut wird. Alternativ oder zusätzlich kann die linke und rechte Anbaulage auch in der vorerwähnten Weise über lagegebundene Steueradressen detektiert werden.

Die Erfindung betrifft auch einen mit der Betriebseinrichtung ausgestatteten straßengängigen Fahrzeuganhänger. Die Stromversorgung und ggf. die Steuereinheit können im Aufbau des Fahrzeuganhängers angeordnet sein. Sie können sich insbesondere in einem schützenden Gehäuse des Aufbaus, z.B. in einer Wohnwagenkabine, befinden. Sie können derart angeordnet werden, dass der Zugang zu den einer oder mehreren mobilen elektrischen Akkus ermöglicht wird. Die ein oder mehreren Ladegeräte und/oder ein oder mehreren elektrischen Akkuhalter können z.B. in ein Möbelstück, z.B. im hohlen Fußteil einer Bank, angeordnet werden. Die kabelgebundenen Stromleitungen und die Steuerleitungen können entsprechend geschützt und ggf. verborgen im Aufbau verlegt und aus dem Aufbau heraus zu den externen Rangierantrieben am Chassis geführt sein.

Der Fahrzeuganhänger kann eine Stromzuleitung von einem Zugfahrzeug und/oder eine Stromzuleitung von einem externen Versorger aufweisen. Eine Stromzuleitung vom Zugfahrzeug kann z.B. ein mit der elektrischen Steckdose am Zugfahrzeug verbindbares Stromkabel sein. Hierüber kann Gleichstrom vom angekuppelten Zugfahrzeug zugeführt werden. Ein externer Versorger kann z.B. ein öffentliches oder privates Stromnetz mit Wechselstrom und höherer Netzspannung von z.B. 220V sein. Die Stromzuleitung kann einen am Fahrzeuganhänger montierbare oder montierte Elektroanschluss, insbesondere Steckdose, mit einem angeschlossenen Stromkabel umfassen. Die besagten Stromzuleitungen können an den ein oder mehreren Ladeanschlüssen der ein oder mehreren elektrischen Ladegeräte fest oder lösbar angebracht werden. Die ein oder mehreren Stromzuleitungen können auch an einer ggf. weiteren Batterie angeschlossen werden. Die elektrische Stromversorgung kann bedarfsweise Umrichter und Spannungswandler umfassen.

Die beschriebenen und beanspruchten Vorrichtungsmerkmale können mit Vorteil auch beim beanspruchten Verfahren eingesetzt werden. Umgekehrt können die beschriebenen und beanspruchten Verfahrensmerkmale vorteilhafter Weise auch bei der/den beanspruchten Vorrichtung(en) eingesetzt werden.

Die Erfindung umfasst auch ein Verfahren zu Betrieb des straßengängigen Fahrzeuganhängers. Der Betrieb kann mit einer Betriebseinrichtung erfolgen, die gemäß Anspruch 1 und folgenden ausgebildet ist.

Die beanspruchte Betriebseinrichtung und das Verfahren können folgende weitere Merkmale umfassen, die einzeln oder in beliebiger Kombination einsetzbar sind.

Die Stromversorgung und bevorzugt die Steuereinheit der Betriebseinrichtung kann/können für einen Inhouse-Betrieb in einer gegen äußere Umwelteinflüsse geschützten Umgebung, insbesondere in einem schützenden Aufbau des Fahrzeuganhängers, ausgebildet sein.

Die Steuereinheit und/oder die Stromversorgung kann/können einen Speiseausgang für ein Nebenaggregat aufweisen.

Die Erfassungseinrichtung einer Überwachungseinrichtung der Betriebseinrichtung kann eine Sensorik an den Rangierantrieben und/oder eine Sensorik an der Stützenanordnung umfassen.

Die Erfassungseinrichtung kann mit der Steuereinheit verbunden sein.

Die Stützenanordnung und ggf. die ein oder mehreren Nebenaggregate kann/können mit der Stromversorgung, insbesondere den ein oder mehreren elektrischen Ladegeräten und/oder den ein oder mehreren elektrischen Akkuhaltern, oder mit der Steuereinheit versorgungstechnisch verbunden sein.

Die Stützenanordnung und ggf. die ein oder mehreren Nebenaggregate kann/können mit der Steuereinheit (23) steuertechnisch verbunden sein.

Die Stützenanordnung kann mehrere hydraulische und/oder mechanische Hubstützen und/oder hydraulische und/oder mechanische Aufbaustützen umfassen.

Die Bedieneinrichtung der Betriebseinrichtung kann mit der Steuereinheit bevorzugt drahtlos kommuniziert.

Die Rangierantriebe können jeweils eine elektrische Antriebseinheit und eine elektrische Zustelleinrichtung umfassen.

Die Antriebseinheit eines Rangierantriebs kann einen elektrischen Antriebsmotor sowie ein hiervon gesteuert angetriebenes und zur Einwirkung an einem Anhängerrad ausgebildetes Treibmittel aufweisen Die Zustelleinrichtung eines Rangierantriebs kann eine Zustellführung und einen elektrisch betriebenen Zustellantrieb umfassen, der zur Zustellung der Antriebseinheit an ein Anhängerrad ausgebildet ist.

Die Detektionseinrichtung der Betriebseinrichtung kann steuertechnische Detektionsmittel und ggf. antriebstechnische Detektionsmittel umfassen und kann bevorzugt mit der Steuereinheit verbunden sein.

Die steuertechnischen Detektionsmittel der Detektionseinrichtung können dazu ausgebildet sein, die Anbaulage der einzelnen Rangierantriebe links und rechts am einem Chassis des straßengängigen Fahrzeuganhänger sowie vor oder hinter einem jeweils zugeordneten Anhängerrad zu detektieren. Die steuertechnischen Detektionsmittel können bevorzugt zwei oder mehr identifizierbare, insbesondere voneinander getrennte, Steuerleitungsknoten und ggf. lagegebundene Steueradressen von linken und rechten Rangierantrieben umfassen.

Die antriebstechnischen Detektionsmittel der Detektionseinrichtung können dazu ausgebildet sein, die rotatorische Richtung der einzelnen Rangierantriebe, insbesondere die Drehlage bezüglich einer definierten Bezugsseite, insbesondere Oberseite, der Rangierantriebe zu detektieren. Die antriebstechnischen Detektionsmittel können bevorzugt jeweils einen Beschleunigungssensor umfassen.

Die Drehlage der Bezugsseite kann mit der Lage der zum Chassis gerichteten, gegebenen Anbauseite eines Rangierantriebs und mit einer diesbezüglichen Position des Treibmittels gekoppelt sein.

Die Detektionseinrichtung kann die Signale der steuertechnischen Detektionsmittel und der antriebstechnischen Detektionsmittel zur Erlangung eines Detektionsergebnisses logisch verknüpfen.

Der beanspruchte straßengängige Fahrzeuganhänger kann eine Stromzuleitung von einem Zugfahrzeug und/oder eine Stromzuleitung von einem externen Versorger, insbesondere Stromnetz, aufweisen.

Am Fahrzeuganhänger, insbesondere in seinem Aufbau, können oder mehrere elektrische und mit der Stromversorgung verbundene Nebenaggregate angeordnet sein, die insbesondere als Kühlschrank, Lüftungseinrichtung oder dgl. ausgebildet sein können.

Bei dem beanspruchten Verfahren kann die Detektionseinrichtung die Zahl und Ausrichtung der einzelnen Rangierantriebe mit steuertechnischen Detektionsmitteln, insbesondere getrennten Steuermittelknoten, detektieren und die Seitenlage links/rechts der einzelnen Rangierantriebe mit antriebstechnischen Detektionsmitteln, insbesondere Beschleunigungssensoren, detektieren, wobei die Signale der Detektionsmittel zur Erlangung eines Detektionsergebnisses logisch miteinander verknüpft werden.

Das Erfassungsergebnis des Überwachungsverfahrens und/oder das Detektionsergebnis können an die Steuereinheit der Betriebseinrichtung gemeldet und von dieser zur Steuerung der Betriebseinrichtung, insbesondere der Rangierantriebe, benutzt werden.

Die Erfindung ist in den Zeichnungen beispielhaft und schematisch dargestellt. Im einzelnen zeigen:
- Figur 1:: einen Fahrzeuganhänger mit einer Betriebseinrichtung in Seitenansicht,
- Figur 2:: eine Draufsicht auf den Fahrzeuganhänger von Figur 1,
- Figur 3:: eine abgebrochene Draufsicht auf einen Rangierantrieb
- Figur 4:: ein Schaltschema der Betriebseinrichtung mit elektrischen Ladegeräten und einer weiteren Batterie,
- Figur 5:: eine perspektivische Ansicht eines Rangierantriebs mit einem Detektionsmittel
- Figur 6:: ein Schaltschema in einer schematischen Draufsicht auf einen Fahrzeuganhänger mit einer Tandemachse,
- Figur 7:: ein Schaltschema der Betriebseinrichtung mit elektrischen Akkuhaltern ohne Ladefunktion und einer weiteren Batterie,
- Figur 8:: eine perspektivische Ansicht eines Ladegerät oder eines elektrischen Akkuhalters mit einem Gehäuse und einem aufgenommenen Akku,
- Figur 9:: eine andere perspektivische Ansicht der Anordnung von Figur 8 mit abgenommenem Akku,
- Figur 10:: einen Horizontalschnitt durch das Gehäuse von Figur 8 und 9 und
- Figur 11:: eine schematische Darstellung einer Platine mit Anschlüssen und Mikroprozessor.

Die Erfindung betrifft eine Betriebseinrichtung (3) und einen damit ausgerüsteten straßengängigen Fahrzeuganhänger (1). Die Erfindung betrifft außerdem ein Betriebsverfahren für einen Fahrzeuganhänger (1).

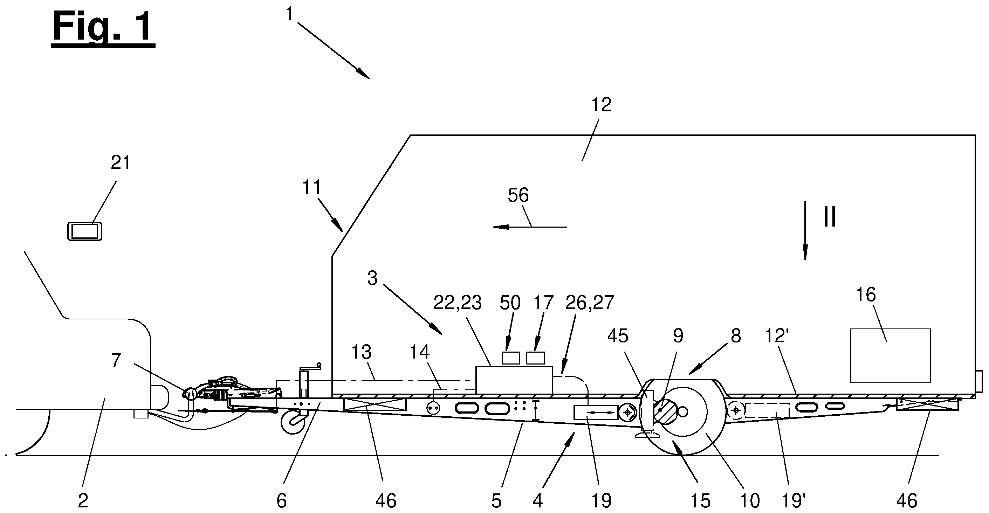

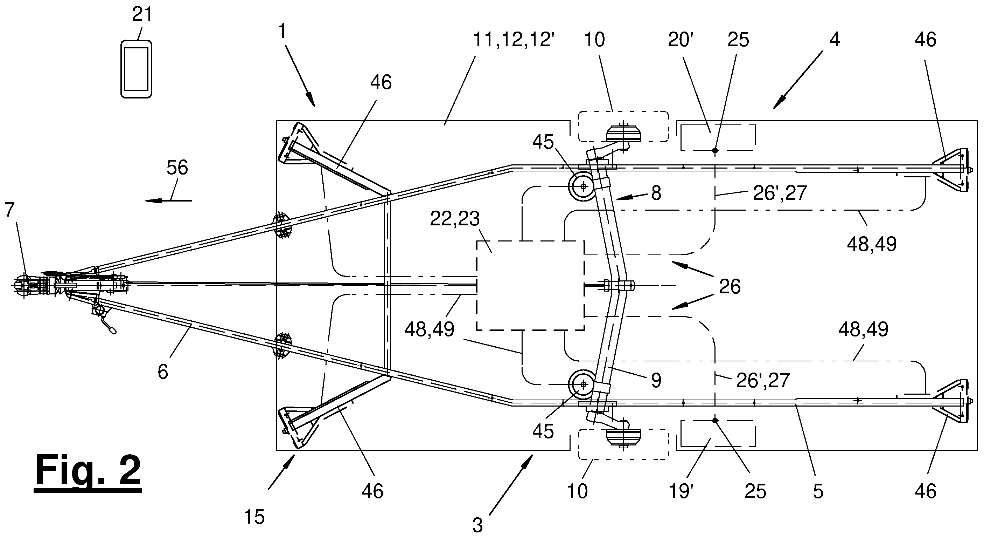

Der straßengängige Fahrzeuganhänger ist in Figur 1 und 2 dargestellt. Der Fahrzeuganhänger (1) ist ein Anhänger, der für den Fahrbetrieb auf Straßen konzipiert ist und der zusammen mit einem Zugfahrzeug (2) ein Gespann bilden kann. Das Zugfahrzeug (2) ist ein Kraftfahrzeug und kann z.B. ein Pkw oder Lkw sein.

Der Fahrzeuganhänger (1) umfasst ein Chassis (5) mit einer frontseitigen Deichsel (6) und einer Kupplung (7) an deren vorderen Ende. Die Richtungsangaben vorn und hinten beziehen sich auf die mit einem Pfeil markierte Vorwärts-Fahrtrichtung (56) des Fahrzeuganhänger (1) und des Gespanns. Das Chassis (5) hat zumindest zwei parallele Längsträger und kann auch ein oder mehrere Querträger umfassen. Auf dem Chassis (5) ist ein Aufbau (11) angeordnet. Dieser umfasst einen bevorzugt auf dem Chassis (5) aufliegenden Boden (12') und ein bevorzugt geschlossenes Gehäuse, z.B. eine Wohnwagenkabine.

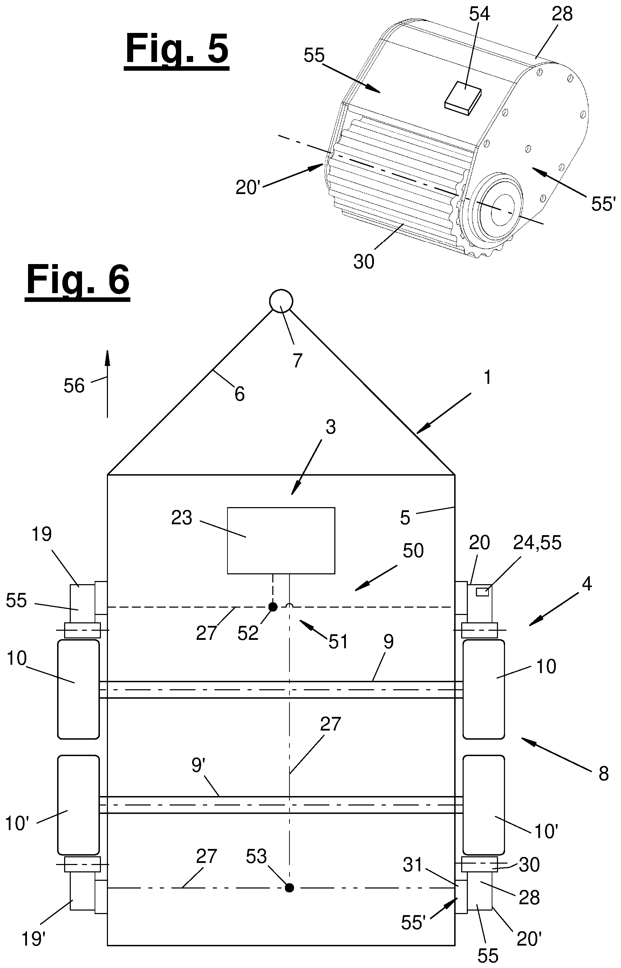

Der Fahrzeuganhänger (1) hat ferner eine am Chassis (5) angeordnete und abgestürzte Achsanordnung (8). Die Achsanordnung (8) kann eine oder mehrere Anhängerachsen (9,9') umfassen. Figur 1 und 2 zeigen eine Variante mit einer einzelnen Anhängerachse (9). In Figur 6 ist schematisch eine Achsanordnung (8) mit zwei Anhängerachsen (9,9'), eine sog. Tandemachse, dargestellt. Die Zahl der Anhängerachsen (9,9') kann auch größer sein.

Die Anhängerachsen (9,9') tragen jeweils ein oder mehrere frei drehbare Anhängerräder (10,10'). Die Anhängerachsen (9,9') können in unterschiedlicher Weise ausgebildet sein. Sie umfassen in den gezeigten Ausführungsbeispielen einen bevorzugt hohlen Achskörper, der sich über die Chassisbreite erstreckt, und an dessen beiden Enden Radschwinghebel drehbar gelagert sind. Die Radschwinghebel tragen an ihren freien Enden jeweils ein Anhängerrad (10,10').

Die Anhängerachsen (9,9') können z.B. die gezeigten Längslenkerachsen mit einem geraden Achskörper oder sog. Schräglenkerachsen mit einem pfeilförmig abgewinkelten Achskörper sein. Alternativ ist eine Achsausbildung als Stummelachsen oder Halbachsen möglich, die jeweils einen verkürzten und nur über einen Teil der Chassisbreite reichenden Achskörper mit nur einem daran gelagerten Radschwinghebel haben. Ansonsten können die Anhängerachse (9,9') in beliebig anderer Weise ausgebildet sein.

Der Fahrzeuganhänger (1) kann eine oder mehrere in Figur 1 gezeigte elektrische Stromzuleitungen (13,14) von einem externen Versorger aufweisen. Hierüber kann dem Fahrzeuganhänger (1) Gleichstrom oder Wechselstrom zugeleitet werden. Eine Stromzuleitung (13) kann vom Zugfahrzeug (2) Gleichstrom zuleiten. Sie kann ein Stromkabel mit einem elektrischen Steckteil, insbesondere einem elektrischen Stecker, am freien Ende aufweisen. Der Stecker kann in eine elektrische Steckdose am Zugfahrzeug (2) lösbar eingesteckt werden.

Eine andere Stromzuleitung (14) kann z.B. für Wechselstrom ausgebildet sein, wobei ein externer Versorger z.B. ein öffentliches oder privates Stromnetz mit Wechselstrom und einer höheren Netzspannung von z.B. 220V ist. Die Stromzuleitung (14) umfasst einen am Fahrzeuganhänger (1) montierten Elektroanschluss, z.B. eine Steckdose am Chassis (5), mit einem angeschlossenen Stromkabel. Hier kann ein elektrischer Stecker vom externen Versorger eingesteckt werden.

Die Betriebseinrichtung (3) umfasst in den gezeigten Ausführungsbeispielen jeweils eine Rangiereinrichtung (4) und eine gesteuert antreibbare Stützenanordnung (15) sowie ein oder mehrere Nebenaggregate (16), z.B. Kühlschrank, Lüftungseinrichtung oder dgl.. Die Rangiereinrichtung (4) umfasst mehrere, z.B. zwei oder vier, elektrisch betriebene Rangierantriebe (19,19',20,20'), die links und rechts außenseitig am Chassis (5), insbesondere an dessen Längsträgern, angebaut werden können oder angebaut sind. In nicht dargestellten Varianten können die Stützanordnung (15) und/oder die ein oder mehreren Nebenaggregate (16) entfallen. In einer weiteren Variante kann die Rangiereinrichtung (4) entfallen, wobei eine Stützenanordnung (15) und ggf. ein oder mehrere Nebenaggregate (16) vorhanden sind.

Die Betriebseinrichtung (3) umfasst ferner eine gemeinsame elektrische Stromversorgung (22), die von den Rangierantrieben (19,19',20,20') örtlich getrennt ist. Von der gemeinsamen elektrischen Stromversorgung (22) können die Rangierantriebe (19,19',20,20') und/oder die Stützenanordnung (15) und/oder die ein oder mehreren Nebenaggregate (16) mit elektrischem Strom versorgt werden. In den gezeigten Ausführungsbeispielen sind die Rangiereinrichtung (4), die Stützenanordnung (15) und die schematisch angedeuteten ein oder mehreren Nebenaggregate (16) mit der elektrischen Stromversorgung (22) versorgungstechnisch verbunden.

Die Betriebseinrichtung (3) umfasst eine Steuereinheit (23). Diese kann eine elektronische, programmgesteuerte Steuereinheit mit einem Mikroprozessor (67) oder einer anderen Recheneinheit, Daten- und Programmspeichern sowie Input- und Output-Schnittstellen, z.B. elektrischen Anschlüssen (63,64,65,66,68,69) sein.

Die Rangierantriebe (19,19',20,20') haben jeweils einen elektrischen Kabelanschluss (25), der für den Anschluss einer von der Stromversorgung (22) kommenden externen, kabelgebundenen Stromzuführung (26) ausgebildet ist. Die externe elektrische Stromzuführung (26) umfasst in den gezeigten Ausführungsbeispielen Stromleitungen (26') bzw. Stromkabel, die an den Kabelanschlüssen (25) angeschlossen werden. Die Stromleitungen (26') können im Lieferumfang der Betriebseinrichtung (3) enthalten sein oder können erst zu einem späteren Zeitpunkt, insbesondere bei der Montage der Betriebseinrichtung (3) am Fahrzeuganhänger (1) von Kunden- oder Monteurseite, zugefügt werden.

Die Rangierantriebe (19,19',20,20') sind für einen Betrieb mit einer Gleichspannung von mehr als 12V, insbesondere ca. 18V oder mehr, ausgelegt. Die elektrische Stromversorgung (22) ist entsprechend für die Ausgabe einer Gleichspannung mit den besagten ca. 18V oder mehr ausgelegt. Die elektrische Stromversorgung (22) kann zusätzlich eine andere Gleichspannung mit z.B. 12V abgeben.

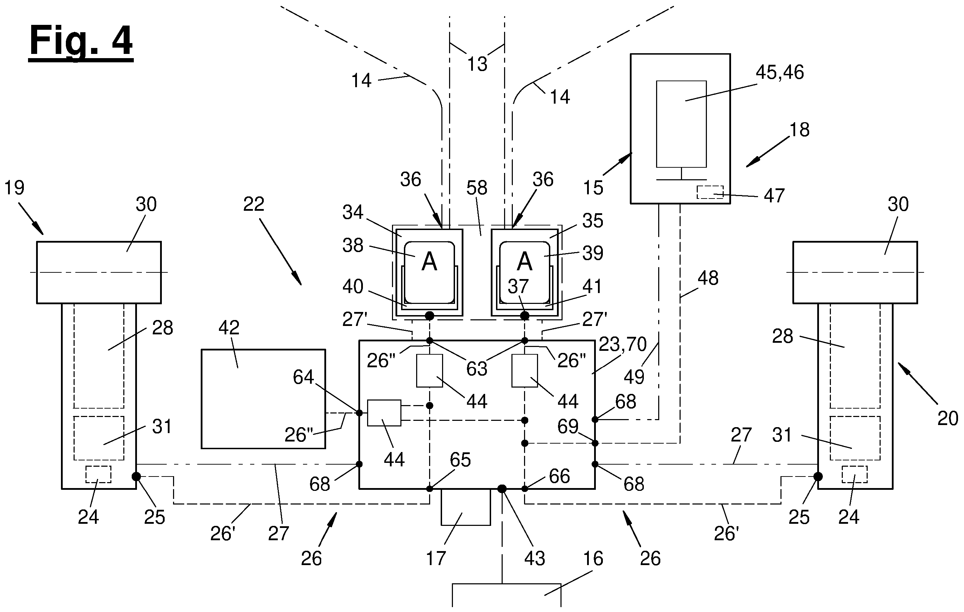

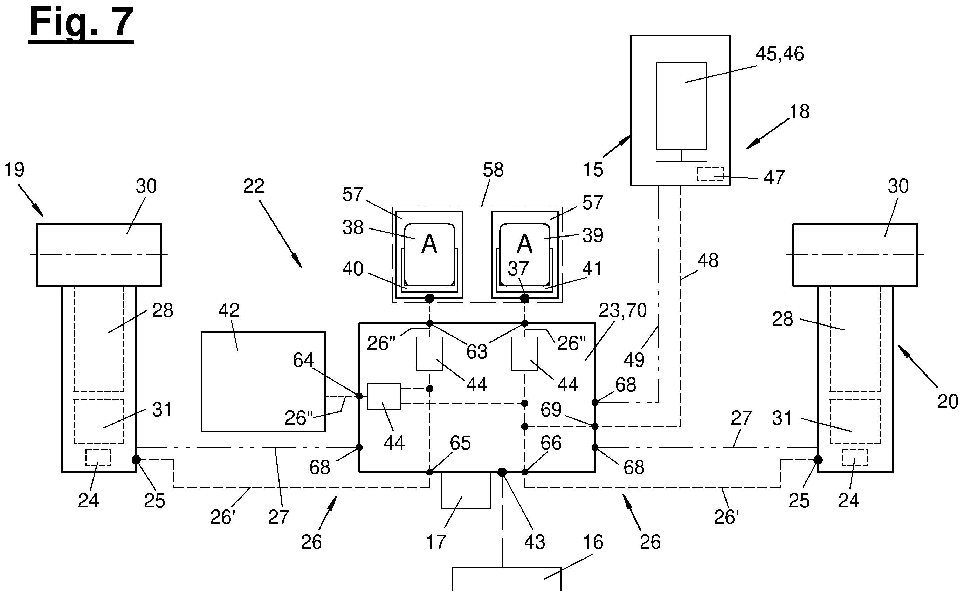

Die elektrische Stromversorgung (22) umfasst in den Ausführungsbeispielen von Figur 1 - 6 ein oder mehrere elektrische Ladegeräte (34,35) mit einer elektrisch leitenden und einen mechanischen Rückhalt bietenden Aufnahme (40,41) für zumindest einen mobilen, lösbar anzuordnenden elektrischen Akku (38,39). Figur 4 verdeutlicht beispielhaft diese Anordnung. Im Ausführungsbeispiel von Figur 7 - 11 weist die elektrische Stromversorgung (22) ein oder mehrere elektrische Akkuhalter (57) ohne elektrische Ladefunktion auf. Diese können die gleiche elektrisch leitende(n) und einen mechanischen Rückhalt bietenden Aufnahme(n) (40,41) für den gleichen zumindest einen mobilen, lösbar anzuordnenden elektrischen Akku (38,39) aufweisen wie das/die elektrischen Ladegerät(e) (34,35).

Die elektrische Stromversorgung (22) kann zusätzlich eine weitere, bevorzugt wiederaufladbare elektrische Batterie (42) umfassen. Dies kann z.B. eine 12V-Batterie sein. Die ein oder mehrere elektrischen Ladegeräte (34,35) haben jeweils ein oder mehrere Ladeanschlüsse (36), an denen die ein oder mehreren elektrischen Stromzuleitungen (13,14) angeschlossen werden können. Die ggf. vorhandene weitere Batterie (42) kann ebenfalls ein oder mehrere Ladeanschlüsse haben, die der Übersicht halber nicht dargestellt sind.

Die elektrische Stromversorgung (22) kann außerdem einen Gleichrichter und Transformator zur Umwandlung der von der Stromzuleitung (14) zugeführten Netz-Wechselspannung umfassen.

In den gezeigten Ausführungsbeispielen von Figur 1 - 6 sind zwei elektrische Ladegeräte (34,35) vorhanden, die jeweils ein Gehäuse (58) mit einer Aufnahme (40,41) für einen mobilen, lösbar anzuordnenden elektrischen Akku (38,39) aufweisen. Die Aufnahmen (40,41) sind z.B. als Steckaufnahmen (59) mit Führungs- und Klemmleisten (60) sowie Elektrokontakten (61) ausgebildet, die den eingesteckten Akku (38,39) formschlüssig lösbar halten und in Steckstellung über entsprechende Elektrokontakte eine Stromverbindung zum Ladegerät (34,35) herstellen. Die ein oder mehreren elektrischen Ladegeräte (34,35) und die Akkus (38,39) sind jeweils analog zu den Rangierantrieben (19,19',20,20') für die besagte Gleichspannung von mehr als 12V, insbesondere ca. 18V oder mehr, ausgelegt.

In einer nicht dargestellten und in Figur 4 durch eine gestrichelte Umrahmung angedeuteten Variante kann nur ein einzelnes elektrisches Ladegerät vorhanden sein, welches ein Gehäuse (58) mit einer oder mehreren der besagten Aufnahmen (40,41) für jeweils mindestens einen der besagten mobilen und lösbar anzuordnenden elektrischen Akkus (38,39) umfasst und ein oder zwei Ladeanschlüsse (36) hat.

Die elektrische Stromversorgung (22) und die Steuereinheit (23) sind in der erwähnten Weise örtlich getrennt von den Rangierantrieben (19,19'20,20') angeordnet und befinden sich geschützt im Fahrzeuganhänger (1), insbesondere in dessen Aufbau (11) und Gehäuse (12). Die elektrische Stromversorgung (22) und die Steuereinheit (23) können für einen Inhouse-Betrieb ausgebildet sein und können ohne Schutzmaßnahme gegen Spritzwasser und andere Umgebungseinflüsse auskommen. Die elektrische Stromversorgung (22), insbesondere die ein oder mehreren Akkus (38,39) sind für Entnahme- und Wechselzwecke zugänglich im Aufbau (11) angeordnet. Die Stromleitungen (26') sind durch den Aufbau (11) nach außen zu den externen Rangierantrieben (19,19',20,20') geführt.

Die Steuereinheit (23) ist in der gezeigten Ausführungsbeispielen von Figur 1 - 6 außerhalb der ein oder mehreren elektrischen Ladegeräte (34,35) angeordnet. In einer in Figur 7 - 11 dargestellten Variante kann die Steuereinheit (23) in zumindest einem der ein oder mehreren elektrischen Ladegeräten (34,35) und/oder ein oder mehreren elektrischen Akkuhaltern (57) integriert sein. Die Steuereinheit (23) kann im hohlen Innenraum des betreffenden Gehäuses (58) bevorzugt liegend angeordnet sein. Die Steuereinheit (23) kann eine Platine (70) und Zugänge (71) an der Wandung des Gehäuses (58) umfassen.

In den gezeigten Ausführungsbeispielen mit getrennter Steuereinheit (23) haben die ein oder mehreren elektrischen Ladegeräte (34,35) jeweils einen Versorgungsausgang (37) für die Abgabe der besagten Gleichspannung und sind über eine oder mehrere Stromleitungen (26") mit der Steuereinheit (23) verbunden. Die ggf. vorhandene weitere Batterie (42) ist ebenfalls über Stromleitungen (26") mit der externen Steuereinheit (23) verbunden. Von der Steuereinheit (23) führen die vorgenannten Stromleitungen (26') zu den Rangierantrieben (19,19',20,20') und deren Kabelanschlüssen (25). Bei einer integrierten Steuereinheit (23) können die Stromleitungen (26") von dem/den elektrischen Ladegerät(en) (34,35) und/oder dem/den elektrischen Akkuhalter(n) (57) zu der Steuereinheit (23) in anderer Weise, z.B. als direkte Steckverbindungen, ausgebildet sein. Die kabelgebundene elektrische Stromzuführung (26) kann die Stromleitungen (26') und die Stromleitungen (26") umfassen.

Die Steuereinheit (23) beschaltet die kabelgebundene Stromzuführung (26) von der Stromversorgung (22) zu den Rangierantrieben (19,19',20,20') und steuert die Rangierantriebe (19,19',20,20'). Die Steuereinheit (23) umfasst hierfür elektrische Schalter (44), die jeweils an den von der Stromversorgung (22) kommenden Stromleitungen (26") angeordnet sind. Die von den ein oder mehreren elektrischen Ladegeräten (34,35) und/oder ein oder mehreren elektrischen Akkuhaltern (57) kommenden Stromleitungen (26") sind jeweils mit der gleichpoligen Stromleitung (26") der ggf. weiteren Batterie (42) verbunden. Figur 4 zeigt diese Anordnung. Die elektrischen Schalter (44) sind jeweils im Stromfluss vor diesen Verbindungsstellen angeordnet. Die Ausgänge und die elektrischen Stromleitungen (26') sind hinter diesen Verbindungsstellen angeordnet. Mittels der elektrischen Schalter (44) werden wahlweise die ein oder mehreren Ladegeräte (34,35) oder die ggf. weitere Batterie (42) mit den Rangierantrieben (19,19',20,20') versorgungstechnisch verbunden. Die elektrischen Schalter (44) können in beliebiger Weise, z.B. im Mikroprozessor (67) oder einer anderen Recheneinheit, ausgebildet sein.

Die Steuereinheit (23) ist mit den Rangierantrieben (19,19',20,20') durch Steuerleitungen (27), insbesondere durch ein Bus-System, z.B. einen CAN-Bus, steuertechnisch verbunden. Die Steuerleitungen (27) sind bevorzugt drahtgebunden. Sie können alternativ auch drahtlos ausgestaltet sein. Das Bus-System kann eine oder mehrere Busknoten (52,53) umfassen, die in Figur 6 dargestellt sind. Die ein oder mehreren elektrischen Ladegeräte (34,35) können mit der Steuereinheit (23) ebenfalls durch eine Steuerleitung (27') steuertechnisch verbunden sein.

Die Steuereinheit (23) und/oder die Stromversorgung (22) kann gemäß Figur 4 einen Speiseausgang (43) aufweisen, der z.B. für eine Gleichspannung von 12V oder auch die Akkuspannung ausgelegt ist. An den Speiseausgang (43) können z.B. ein oder mehrere Nebenaggregate (16) angeschlossen sein. Der Speiseausgang (43) kann mehrfach vorhanden sein. Über den Speiseausgang (43) können die ein oder mehrere Nebenaggregate (16) mit Strom versorgt und bedarfsweise gesteuert werden.

Die Rangierantriebe (19,19',20,20') umfassen jeweils eine elektrische Antriebseinheit (28) und eine elektrische Zustelleinrichtung (31). Die Antriebseinheit (28) weist einen elektrischen Antriebsmotor (29) sowie ein hiervon gesteuert angetriebenes Treibmittel (30) auf, welches auf ein Anhängerad (10,10') einwirkt und entsprechend ausgebildet ist. In die gezeigten Ausführungsformen ist das Treibmittel (30) als drehbare und rotierend angetriebene Treibwalze mit einem reibungsgünstigen Walzenmantel ausgebildet und wird an die Lauffläche des jeweils zugeordneten Anhängerrads (10,10') mit Anpressdruck zugestellt.

Die Zustelleinrichtung (31) weist eine Zustellführung (32) und einen elektrisch betriebenen Zustellantrieb (33) für die Zustellung der Antriebseinheit (28) auf. Die Zustellführung (32) ist z.B. eine schlittenartige Linearführung, die z.B. in Fahrtrichtung (56) ausgerichtet ist. Die Zustellführung (32) ist am Chassis (5), insbesondere außenseitig am aufrechten Mittelsteg eines der Längsträger, nahe der zugeordneten Anhängerachse (9,9') montierbar oder montiert. Zwischen den linken und rechten Zugestellführungen (32) kann eine quer über das Chassis (5) reichende Stützstrebe (nicht dargestellt) angeordnet sein. Der elektrische Zustellantrieb (33) und dessen Motor kann sich in der Zustellführung (32) oder in der Antriebseinheit (28) befinden. Der Kabelanschluss (25) kann an geeigneter Stelle des Rangierantriebs (19,19',20,20') angeordnet sein.

Wie Figur 1 und 2 verdeutlichen, kann ein Rangierantrieb (19,19',20,20') in Vorwärts-Fahrtrichtung (56) vor oder hinter dem zugeordneten Anhängerrad (10) einer einzelnen Anhängerachse (9) angeordnet sein. Dementsprechend ändert sich die Drehrichtung des Treibmittels (30), um das beaufschlagte Anhängerrad (10) für eine Rangierfahrt in Vorwärts- oder Rückwärtsrichtung zu drehen. Figur 1 zeigt mit durchgezogenen Linien einen Rangierantrieb (19) vor dem zugeordneten Anhängerrad (10) und gestrichelt einen Rangierantrieb (19') hinter dem Anhängerrad (10). In Figur 2 sind linke und rechte Rangierantriebe (19',20') hinter dem jeweils zugeordneten Anhängerrad (10) dargestellt.

Bei den zwei Anhängerachsen (9,9') bzw. der Tandemachse von Figur 6 sind z.B. linke und rechte Rangierantriebe (19,20) vor der ersten Anhängerachse (9) und ihren Anhängerrädern (10) sowie linke und rechte Rangierantriebe (19',20') hinter der zweiten Anhängerachse (9') und ihren Anhängerrädern (10') angeordnet.

Figur 1 und 2 zeigen die vorgenannte gesteuert antreibbare Stützenanordnung (15). Diese dient zur Abstützung des bevorzugt abgekuppelten Fahrzeuganhängers (1). Die Stützenanordnung (15) weist z.B. zwei bevorzugt hydraulische Hubstützen (45) auf, die im Achsbereich am Chassis (5) montiert sind. Sie können z.B. am Achskörper einer Anhängerachse (9) und/oder an einem Längsträger des Chassis (5) montiert sein. Die Hubstützen umfassen z.B. einen Hydraulikzylinder mit einer ausfahrbaren Kolbenstange, die am freien Ende einen Stützteller zur Auflage und Abstützung am Untergrund umfasst. Hierbei ist zumindest ein Paar von linken und rechten Hubstützen (45) vorhanden. Die Hubstützen (45) können eine gemeinsame und insoweit zentrale Hydraulikversorgung haben oder können jeweils eine eigene und somit dezentrale Hydraulikversorgung mit jeweils einem Tank für Hydraulikflüssigkeit und einer bevorzugt elektrischen, steuerbaren Pumpe besitzen.

Die Stützenanordnung (17) kann ferner ein oder mehrere, z.B. vier, Aufbaustützen (46) umfassen. Diese können z.B. an den vier Eckbereichen des Aufbaus (11) angeordnet sein. Sie können dabei am Boden (12') und/oder am Chassis (5) montiert und abgestützt sein. Die Aufbaustützen (46) können z.B. einen zum Untergrund hin absenkbaren oder abschwenkbaren Stützenfuß und einen entsprechenden Stützenantrieb nebst Lenkergetriebe umfassen. Dies kann z.B. ein elektromechanischer Antrieb oder auch ein hydraulischer Antrieb sein.

Die Stützenanordnung (15) und ihre Hubstützen (45) und/oder Aufbaustützen (46) sind mit der elektrischen Stromversorgung (22) versorgungstechnisch über zumindest eine elektrische Stromleitung (48) verbunden. Die zumindest eine Stromleitung (48) kann gemäß Figur 4 an eine oder mehrere Stromleitungen (26") in Stromflussrichtung hinter den Schaltern (44) angeschlossen sein.

Die Stützenanordnung (15) und ihre Hub- und/oder Aufbaustützen (45,46) können ebenfalls von der Steuereinheit (23) über eine oder mehrere Steuerleitungen (49), insbesondere über ein Bus-System, gesteuert werden.

Die Betriebseinrichtung (3) umfasst eine bevorzugt mobile Bedieneinrichtung (21). Diese kann z.B. als dedizierte Fernbedienung ausgebildet sein, die an die verschiedenen Ausgestaltungsmöglichkeiten der Betriebseinrichtung (3) und ihrer vorgenannten Komponenten angepasst ist. Die Fernbedienung kann Bedienmittel, z.B. Tasten, Joystick oder dgl. und auch eine Anzeige umfassen. Die Anzeige kann z.B. als Touchscreen ausgebildet sein. Die Fernbedienung kann mit der Steuereinheit (23) drahtlos oder drahtgebunden bidirektional kommunizieren. Hierfür ist eine entsprechend ausgebildete Kommunikationseinrichtung vorhanden.

In einer anderen Ausführungsform kann die Bedieneinrichtung eine Steuer-App für ein z.B. kundenseitig bereits vorhandenes Smartphone, Tablet oder dgl. ausgebildet sein. Die Steuer-App ist ein Computerprogrammprodukt, welches zum Steuern der Betriebseinrichtung (3) ausgebildet ist und in geeigneter Weise auf das Smartphone oder dgl. aufgespielt und dort gespeichert werden kann. Die Kommunikation mit der Steuereinheit (23) erfolgt bevorzugt drahtlos.

Eine drahtlose Kommunikation kann in beliebig geeigneter Weise, z.B. per Funk, insbesondere Bluetooth, NFC, optisch per Infrarot oder dgl. erfolgen. In einer nicht dargestellten Ausführungsform kann die Bedieneinrichtung (21) in den genannten Ausgestaltungen auch direkt mit den Rangierantrieben (19,19',20,20') kommunizieren.

Die Bedieneinrichtung (21) umfasst in den verschiedenen Ausgestaltungen jeweils ein Bedienprogramm für die vorgenannten Komponenten der Betriebseinrichtung (3), insbesondere Rangiereinrichtung (4) und Stützenanordnung (15). Zudem können Eingabe- und Meldemasken oder dergleichen für eine anzeigengestützte Bedienung per Touchscreen oder dergleichen vorhanden sein.

Beim Rangieren des Fahrzeuganhängers (1) können die Rangierantriebe (19,19',20,20') selektiv angesteuert werden. Ihre Geschwindigkeit kann geregelt und aufeinander abgeglichen werden, z.B. mittels Drehzahlsensoren. Für Lenkbewegungen können die linken und rechten Rangierantriebe (19,19',20,20') bei gleicher Antriebsrichtung unterschiedliche Geschwindigkeiten haben. Außerdem ist ein Wenden im Stand durch gegensätzliche Antriebsrichtungen links und rechts möglich.

Die Betriebseinrichtung (3) kann gemäß Figur 1 und 2 eine Überwachungseinrichtung (17) aufweisen, mit der die korrekte Funktion der Betriebseinrichtung (3), insbesondere der Rangiereinrichtung (4) und ggf. der Stützenanordnung (15), sichergestellt werden kann. Die Überwachungseinrichtung (17) kann mit der Steuereinheit (23) verbunden sein. Sie kann auch in diese implementiert sein.

Die Überwachungseinrichtung (17) kann ein Hardwaremodul und/oder ein Softwaremodul umfassen. Die Überwachungseinrichtung (17) umfasst ferner eine Erfassungseinrichtung (18), mit der Betriebszustände der Betriebseinrichtung (3), insbesondere der Rangiereinrichtung (4) und ggf. der Stützenanordnung (15), erfasst werden können. Solche Betriebszustände können **z.B.** eine Einfahr- oder Ausfahrstellung der Hub- und/oder Aufbaustützen (45,46), eine Anpressstellung von Treibmitteln (30) an Anhängerrädern (10,10'), eine Strombeaufschlagung der Antriebseinheit (28) oder dgl. umfassen. Die Erfassungseinrichtung (18) kann hierfür eine Sensorik (24) an den Rangierantrieben (19,19',20,20') und/oder eine Sensorik (47) an der Stützenanordnung (15) umfassen. Die Sensoriken (24,47) können jeweils ein oder mehrere Sensoren umfassen. Bei der Sensorik (24) der Rangierantriebe (19,19',20,20') können dies z.B. Kraftsensoren für die Anpresskraft, Stromsensoren für die Motorstromaufnahme der Antriebseinheit (28) und/oder der Zustelleinrichtung (31) und/oder Drehzahlsensoren der Antriebseinheit (28) sein. Die Sensorik (47) kann z.B. Drucksensoren in einem Hydraulikreis, Stromsensoren für die Motorstromaufnahme der Stützenantriebe, Wegmesser, Endlagenmelder oder dgl. umfassen. Die Sensoriken (24,47) sind mit der Steuereinheit (23) verbunden. Sie können auch zu anderen Zwecken, insbesondere zur Steuerung der Rangierantriebe (19,19',20,20') und der Stützenanordnung (15) mit den der Hub- und/oder Aufbaustützen (45,46) benutzt werden.

Mit der Überwachungseinrichtung (17) können potenziell gefährliche Betriebssituationen erfasst werden, wobei die Steuereinheit (23) dann entsprechende Sicherungsmaßnahmen ergreift. Hierbei kann z.B. verhindert werden, dass eine Rangierfahrt eingeleitet wird, wenn die Aufbau- und Hubstützen (45,46) noch Bodenkontakt haben. Andererseits kann eine Betätigung der Stützenanordnung (15) bei noch bestehender Rangierfahrt verhindert werden. Daneben kann es weitere betriebskritische Situationen geben.

Die Betriebseinrichtung (3) kann ferner eine in Figur 6 verdeutlichte Detektionseinrichtung (50) umfassen. Diese ist dazu ausgebildet und vorgesehen, in Anbaustellung der Rangierantriebe (19,19',20,20') am Fahrzeuganhänger (1) automatisch deren Zahl, Seitenlage links/rechts und Ausrichtung vor/hinter dem jeweils zugeordneten Anhängerrad (10,10') zu detektieren. Die Detektionseinrichtung (50) ist mit der verbunden und kann in diese auch implementiert sein. Die Detektionseinrichtung (50) umfasst steuertechnische Detektionsmittel (51) und ggf. auch antriebstechnische Detektionsmittel (54). Die Signale der Detektionsmittel (51,54) können von der Detektionseinrichtung (50) oder der Steuereinheit (23) logisch verknüpft und ausgewertet werden.

Die Steuereinheit (23) kann dank der Detektionseinrichtung (50) ohne einen Eingabevorgang oder ein Teaching die Rangierantriebe (19,19',20,20') gezielt und entsprechend ihrer Seitenlage und Ausrichtung ansteuern, wobei insbesondere die Antriebsrichtung, insbesondere Drehrichtung, der Treibmittel (30) automatisch richtig gesteuert werden kann.

Die steuertechnischen Detektionsmittel (51) sind dazu ausgebildet, die Zahl der Anhängerachsen und der Rangierantriebe sowie die Anbaulage der einzelnen Rangierantriebe (19,19',20,20') vor oder hinter dem zugeordneten Anhängerrad (10,10') zu detektieren.

Wie Figur 6 verdeutlicht, können die steuertechnischen Detektionsmittel (51) zwei oder mehr identifizierbare und voneinander getrennte Steuerleitungsknoten (52,53), insbesondere Busknoten, umfassen. Die Steuerleitungen der Steuerleitungsknoten (52,53) können an der Steuereinheit (23) getrennt angeschlossen sein. Die gezeigte Detektionseinrichtung (50) und die steuertechnischen Detektionsmittel (51), insbesondere zwei oder mehr Steuerleitungsknoten (52,53), können bei der in Figur 6 gezeigten Tandemachse und auch bei einer einzelnen Anhängerachse (9) gemäß Figur 1 und 2 eingesetzt werden.

Bei einer Einzelachse (9) wird nur einer der Steuerleitungsknoten (52,53) angeschlossen. Dabei sind nur zwei Rangierantriebe (19,20) vorhanden. Wenn beide Steuerleitungsknoten (52,53) angeschlossen sind, kann die Steuereinheit (23) hierüber erkennen, dass zwei Anhängerachsen (9,9') und vier Rangierantriebe (19,19',20,20') vorhanden sind. Bei zwei Anhängerachsen (9,9') bzw. einer sog. Tandemachse ist auch die übliche Zuordnung bekannt, wobei gemäß Figur 6 zwei linke und rechte Rangierantriebe (19,20) in Vorwärts-Fahrtrichtung (56) vor der ersten Anhängerachse (9) und die beiden anderen Rangierantriebe (19',20') hinter der zweiten Anhängerachse (9') am Chassis (5) angebaut sind.

Der eine Steuerleitungsknoten (52) ist z.B. der einzelnen Anhängerachse (9) oder der in Fahrtrichtung (56) vorderen Anhängerachse (9) einer Tandemachse zugeordnet. An den Steuerleitungsknoten (52) sind die Steuerleitungen (27) der beiden linken und rechten Rangierantriebe (19,20) angeschlossen. Diese Rangierantriebe (19,20) sind dabei definitionsgemäß in Vorwärts-Fahrtrichtung (56) vor der ersten Anhängerachse (9) am Chassis (5) angebaut.

Der zweite Steuerleitungsknoten (53) kann eine Mehrfachzuordnung haben. Er ist z.B. bei einer Tandemachse der in Fahrtrichtung (56) hinteren Anhängerachse (9') zugeordnet, wobei die dortigen Rangierantriebe (19',20') am Steuerleitungsknoten (53) angeschlossen sind. Bei einer einzelnen Anhängerachse (9) kann der zweite Steuerleitungsknoten (53) ebenfalls dieser Anhängerachse (9) zugeordnet sein. Dabei sind die Rangierantriebe (19',20') definitionsgemäß in Vorwärts-Fahrtrichtung (56) hinter der ersten Anhängerachse (9) am Chassis (5) angebaut und am Steuerleitungsknoten (53) angeschlossen.

Bei der Montage der z.B. zwei oder vier Rangierantriebe (19,19',20,20') erhält die Steuereinheit (23) von der Detektionseinrichtung (50) durch die entsprechende Beschaltung der Steuerleitungsknoten (52,53) automatisch die Information, wie viele Anhängerachsen (9,9') und Rangierantriebe (19,19',20,20') vorhanden sind und welche Lagezuordnung die Rangierantriebe (19,19',20,20') jeweils am zugeordneten Anhängerrad (10,10') haben.

Bei Beschaltung beider Steuerleitungsknoten (52,53) sind vier Rangierantriebe (19,19',20,20') gemäß Figur 6 angeordnet. Bei Beschaltung von nur einem der Steuerleitungsknoten (52,53) sind nur zwei Rangierantriebe (19,19',20,20') vorhanden, wobei durch die Beschaltung des einen oder des anderen Steuerleitungsknotens (52,53) signalisiert wird, dass sich die beiden Rangierantriebe (19,19',20,20') in Vorwärts-Fahrtrichtung (56) gemäß vor oder hinter dem zugeordneten Anhängerrad (10) befinden. Figur 1 zeigt diese Anbaumöglichkeiten.

Die steuertechnischen Detektionsmittel (51) können auch lagegebundene Steueradressen, insbesondere Busadressen, von linken und rechten Rangierantrieben (19,19'20,20') umfassen.

Die antriebstechnischen Detektionsmittel (54) können dazu ausgebildet sein, die rotatorische Richtung der einzelnen Rangierantriebe (19,19',20,20') zu detektieren. Hierüber kann bei detektierter Zuordnung vor oder hinter dem betreffenden Anhängerrad (10,10') festgestellt werden, ob der betreffende Rangierantrieb (19,19',20,20') in Fahrtrichtung (56) links oder rechts am Chassis (5) angeordnet ist. Die antriebstechnischen Detektionsmittel (54) können die steuertechnischen Detektionsmittel (51) ergänzen.

Die antriebstechnischen Detektionsmittel (54) können insbesondere die Drehlage oben/unten einer definierten oberen oder unteren Bezugsseite (55) der Rangierantriebe (19,19',20,20') detektieren. Die Bezugsseite (55) kann z.B. die Oberseite sein. Die Drehlage der Bezugsseite (55) kann per Definition mit der Lage der zum Chassis (5) gerichteten, gegebenen Anbauseite (55') des Rangierantriebs (19,19',20,20') und mit einer diesbezüglichen Position des Treibmittels (30) gekoppelt werden.

Wenn z.B. gemäß Figur 5 die Bezugsseite (55) oben liegt, befindet sich das Treibmittel (30) mit Blick auf die Anbauseite (55') an der linken Seite des Rangierantriebs (19,19',20,20'). Die in Figur 5 gezeigte Anbauseite (55') kann z.B. ein Montageflansch der Antriebseinheit (28) an der Zustelleinrichtung (31) sein. Diese Detektionsmöglichkeit ist vor allem für universell links oder rechts am Chassis (5) anbaubare Rangierantriebe (19,19',20,20') von Vorteil.

Die Detektionsmittel (54) können z.B. einen Beschleunigungssensor umfassen, wie er beispielhaft in Figur 5 dargestellt ist. Hierüber lässt sich die Lage der Bezugsseite (55) und die Position des Treibmittels (30) feststellen.

Wenn der in Figur 5 beispielhaft gezeigte Rangierantrieb (20') mit oben liegender Bezugsseite (55) gemäß einer mittels Detektionsmittel (54) detektierten Ausrichtung an einer Einzelachse oder Tandemachse hinter dem betreffenden Anhängerrad (10,10') angeordnet ist, ist er in Anbaulage an der in Fahrtrichtung (56) rechten Chassisseite gemäß Figur 2 und 6 angebaut. Umgekehrt ist der Rangierantrieb bei gleicher Ausrichtung, aber in umgekehrter Drehlage mit der Bezugsseite (55) unten an der linken Chassisseite angebaut.

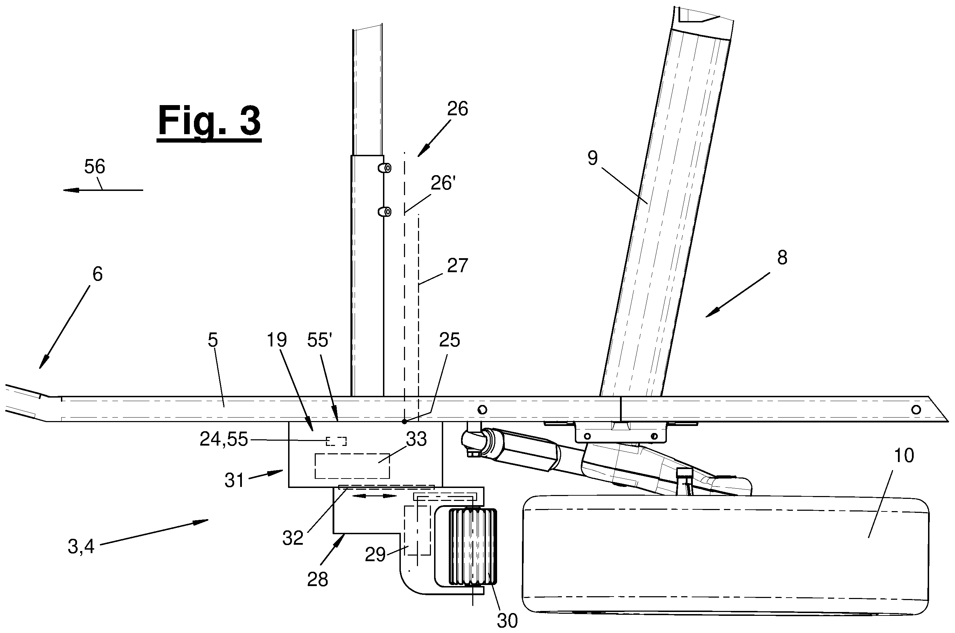

Andererseits ist der in Figur 5 gezeigte Rangierantrieb mit oben liegender Bezugsseite (55) bei einer detektierten Ausrichtung an einer Einzelachse oder Tandemachse vor dem betreffenden Anhängerrad (10) an der in Fahrtrichtung (56) linken Chassisseite gemäß Figur 3 angebaut. Mit unten liegender Bezugsseite (55) und gleicher Ausrichtung ist der Rangierantrieb an der in Fahrtrichtung (56) rechten Chassisseite angebaut.

Somit lässt sich aus der Detektion von Ausrichtung und Drehlage feststellen, ob der betreffende Rangierantrieb (19,19',20,20') in Fahrtrichtung (56) links oder rechts am Chassis (5) angeordnet ist.

Dies gilt für beliebige Achskonfigurationen der Achsanordnung (8) als Einzelachse, Tandemachse oder Tripelachse oder dergleichen. Bei der in Figur 6 gezeigten Tandemachse mit eng benachbarten Anhängerachsen (9,9') sind z.B. die Rangierantriebe (19,20) vor den Anhängerrädern (10) und die anderen Rangierantriebe (19',20') hinter ihren zugeordneten Anhängerrädern (10') angeordnet.

Figur 7 bis 11 verdeutlichen das eingangs genannte Ausführungsbeispiel einer elektrischen Stromversorgung (22), die ein oder mehrere elektrische Akkuhalter (57) ohne elektrische Ladefunktion umfasst. Die ein oder mehreren elektrischen Akkuhalter (57) unterscheiden sich von den vorbeschriebenen ein oder mehreren elektrischen Ladegeräten (34,35) bevorzugt nur durch das Fehlen der elektrischen Ladefunktion. Sie stimmen ansonsten mit der vorbeschriebenen Ausbildung, Anordnung und Beschaltung der ein oder mehreren elektrischen Ladegeräte (34,35) überein.

Figur 7 zeigt eine Variante des Schaltschemas der Betriebseinrichtung (3), wobei ein oder mehrere elektrische Akkuhalter (57) statt der ein oder mehreren elektrischen Ladegeräte (34,35) von Figur 4 vorhanden sind. Es ist auch eine nicht dargestellte Mischform möglich, bei der die Stromversorgung (22) ein oder mehrere elektrische Ladegeräte (34,35) und ein oder mehrere elektrische Akkuhalter (57) in Kombination umfasst.

Bei einem Ausführungsbeispiel von Figur 7 sind die ein oder mehreren elektrischen Akkuhalter (57) jeweils mit zumindest einem elektrischen Versorgungsausgang (37) ausgestattet und sind mit der Steuereinheit (23) über Stromleitungen (26") versorgungstechnisch und elektrisch leitend verbunden. Die Steuerleitungen (27') von der Steuereinheit (23) zu den ein oder mehreren elektrischen Akkuhaltern (57) kann entfallen. Ansonsten kann die Steuereinheit (23) in der gleichen vorbeschriebenen Weise wie beim ersten Ausführungsbeispiel von Figur 1 bis 7 ausgestaltet sein. Dies gilt auch für die Rangierantriebe (19,19',20,20'), die ggf. vorhandene weitere Batterie (42) mit z.B. 12 V, die Stützenanordnung (15), die ein oder mehreren Nebenaggregate (16) sowie die Überwachungseinrichtung (17) und die Detektionseinrichtung (50) sowie die weiteren vorbeschriebenen Komponenten der Betriebseinrichtung (3), des Betriebsverfahrens und des straßengängigen Fahrzeuganhängers (1).

Im Ausführungsbeispiel der Figuren 7 bis 11 kann die Steuereinheit (23) ebenfalls getrennt von der Stromversorgung (22) angeordnet sein oder kann in die Stromversorgung (22), insbesondere in die ein oder mehreren elektrischen Ladegeräte (34,35) und/oder ein oder mehreren elektrischen Akkuhalter (57), integriert sein.

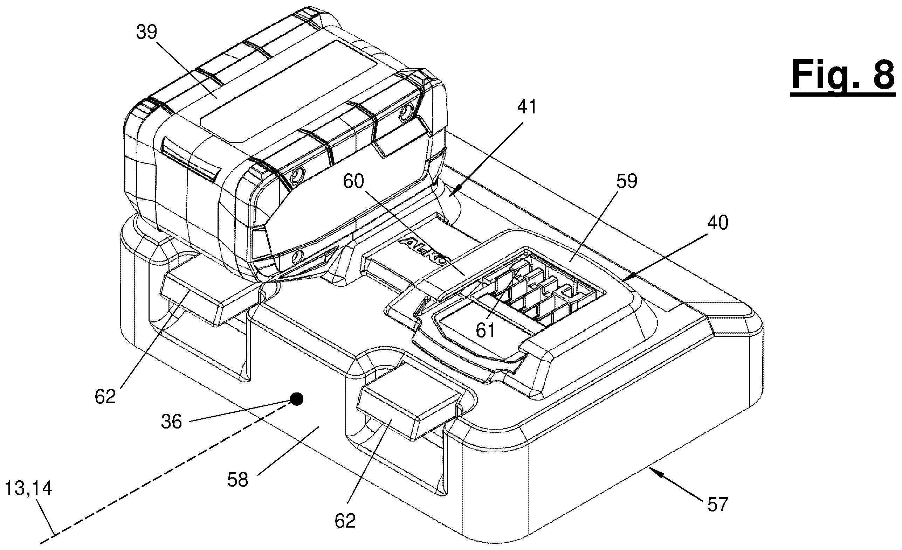

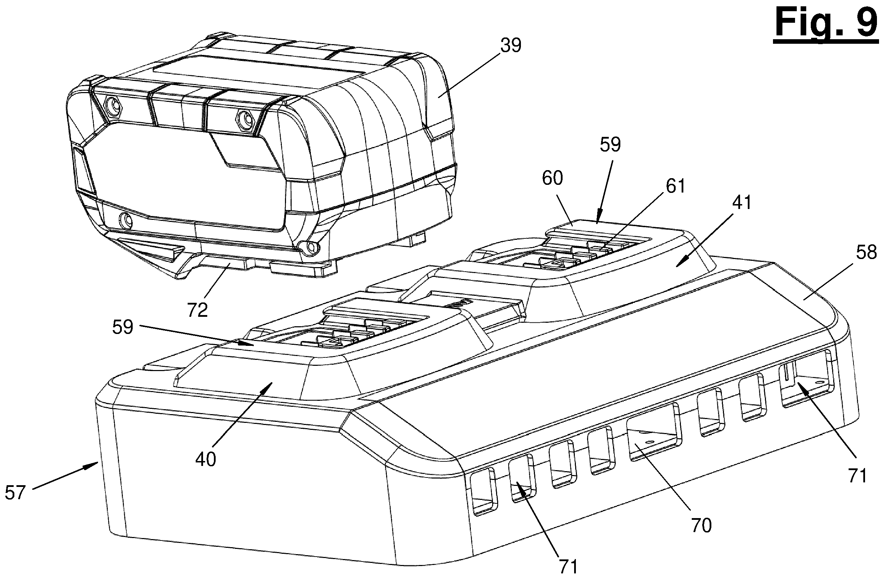

Figur 8 bis 11 verdeutlichen eine solche Ausbildung. Sie zeigen einen elektrischen Akkuhalter (57) ohne elektrische Ladefunktion, der ein Gehäuse (58) umfasst, an oder auf dem ein oder mehrere der vorbeschriebenen Aufnahmen (40,41) für ein oder mehrere elektrische Akkus (38,39) angeordnet sind. Figur 8 und 9 zeigen weitere Details der ein oder mehreren Aufnahmen (40,41). Diese umfassen jeweils eine Steckaufnahme (59) mit z.B. parallelen seitlichen Führungs- und Klemmleisten (60) sowie Elektrokontakten (61). An der Steckaufnahme (59) kann ein in Figur 9 in gelöster Lage gezeigter elektrischer Akku (38,39) lösbar eingesteckt werden, wobei z.B. die Führungs- und Klemmleisten (60) der Aufnahmen (40,41) jeweils mit Gegenleisten (72) an z.B. der Unterseite eines elektrischen Akkus (38,39) in führenden und lösbaren Eingriff treten. Die Klemmverbindung kann verriegelbar sein und kann z.B. durch jeweils einen Auslöser (62) am Gehäuse (58) bedarfsweise zum Abnehmen des Akkus (38,39) gelöst werden.

Die ein oder mehreren elektrischen Akkuhalter (57) können in gleicher Weise wie die vorbeschriebenen elektrischen Ladegeräte (34,35) als Einzelgeräte mit jeweils einem Gehäuse (58) und einer Aufnahme (40) ausgebildet sein. Die Stromversorgung (22) kann mehrere solcher Einzelgeräte umfassen, die z.B. elektrisch parallel geschaltet sind.

Figur 8 und 9 zeigen die andere Variante eines elektrischen Akkuhalters (57), an dessen Gehäuse (58) mehrere, z.B. zwei oder mehr, Aufnahmen (40,41) der vorbeschriebenen Art für eine entsprechende Anzahl von elektrischen Akkus (38,39) angeordnet sind.

Die ein oder mehreren elektrischen Akkuhalter (57) können in der vorbeschriebenen Weise jeweils zumindest einen Versorgungsausgang (37) umfassen, der z.B. am Gehäuse (58) angeordnet ist und der z.B. über ein oder mehrere Stromleitungen (26") mit der Steuereinheit (23) und deren ein oder mehreren Anschlüssen (63) verbunden ist.

Bei der gezeigten integrierten Anordnung der Steuereinheit (23) kann die Steuereinheit (23) und deren Platine im hohlen Innenraum des Gehäuses (58) angeordnet sein. Figur 9 zeigt diese bevorzugt liegende Platinenanordnung nebst Zugängen (71) an der Gehäusewandung, über die von außen die kabelgebundenen Stromleitungen (26') zu den Rangierantrieben (19,19',20,20'), die eventuelle Stromleitung (26") zu einer eventuellen weiteren Batterie (42) sowie die ein oder mehreren Stromleitungen (48) der Stützenanordnung (15) und auch die vorgenannten Steuerleitungen (27,49) angebunden werden können.

Bei den vorgenannten elektrischen Ladegeräten (34,35) kann eine integrierte Anordnung der Steuereinheit (23) in gleicher Weise ausgebildet sein. In Figur 8 sind hierfür beispielhaft und schematisch eine Stromzuleitung (13,14) und ein Ladeanschluss (36) dargestellt.

Wie Figur 4, 7 und 11 verdeutlichen, sind an der Steuereinheit (23), insbesondere an der Platine (70), die vorgenannten Anschlüsse für die Stromleitungen (26',26", 48) und die Steuerleitungen (27,49) angeordnet.

An den ein oder mehreren Anschlüssen (63) werden z.B. die ein oder mehreren elektrischen Ladegeräte (34,35) und/oder ein oder mehreren elektrischen Akkuhalter (57) und deren Stromleitungen (26") angeschlossen. Die Stromleitungen (26") können z.B. als Stromkabel und/oder als Steckkontakte ausgebildet sein. Bei einer integrierten Anordnung der Steuereinheit (23) können z.B. die Elektrokontakte (61) der ein oder mehreren Aufnahmen (40,41) durch Steckkontakte direkt mit den ein oder mehreren Anschlüssen (63) verbunden sein.

An den ein oder mehreren Anschlüssen (64) kann eine ggf. vorhandene weitere, bevorzugt wieder aufladbare, elektrische Batterie (42) über eine Stromleitung (26") angeschlossen werden.

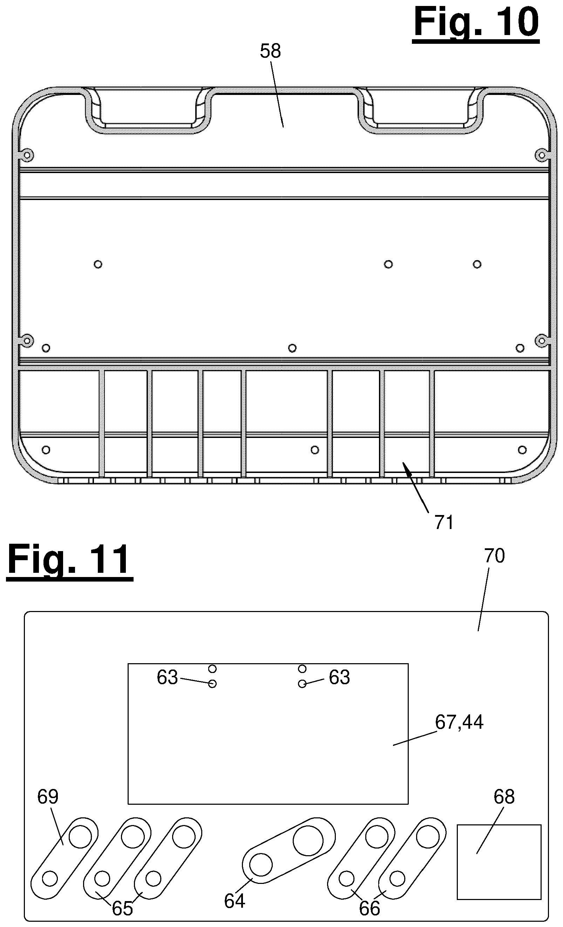

An den Anschlüssen (65,66) können die kabelgebundenen Stromleitungen (26') der jeweils ein oder mehreren linken und rechten Rangierantriebe (19,19',20,20') angeschlossen werden. Die Anschlüsse (65,66) können jeweils gemäß Figur 11 in einer Doppelanordnung vorhanden sein, so dass z.B. bei einer Tandemachse vier Rangierantriebe (19,19',20,20') mit ihren Stromleitungen (26') jeweils einzeln angeschlossen werden können. Sie können dadurch getrennt voneinander mit Spannung beaufschlagt werden.

An einem Anschluss (69) kann eine Stromleitung (48) der Stützenanordnung (15) angeschlossen werden. Die Stromleitung (48) und der Anschluss (69) können mehrfach vorhanden sein.

An den Anschlüssen (68) können die Steuerleitungen (27) der zwei oder mehr Rangierantriebe (19,19',20,20') und die zumindest eine Steuerleitung (49) der Stützenanordnung (15) angeschlossen werden. Entsprechende Anschlüsse für Steuerleitungen (27') können auch für die ein oder mehreren elektrischen Ladegeräte (34,35) vorhanden sein. Der Speiseausgang (43) kann ebenfalls solche, nicht dargestellt, Anschlüsse (68,69) für Strom- und Steuerleitungen umfassen. Die Anschlüsse (68) für Steuerleitungen können zu einem Busanschluss zusammengefasst sein.

Die vorgenannten Anschlüsse (63,64,65,66,68,69) sind in Figur 4 und 7 der Übersicht halber jeweils als Punkte schematisch dargestellt. In der Praxis sind sie gemäß Figur 11 z.B. zweipolig ausgebildet.

Die in Figur 4 und 7 einzeln dargestellten Schalter (44) können als Einzelschalter ausgebildet sein. Sie können in der bevorzugten Ausführungsform in den Mikroprozessor (67) integriert sein. Am Mikroprozessor (67) können sich auch die vorgenannten Anschlüsse (63) befinden

Figur 10 und 11 zeigen in einem Horizontalschnitt durch das Gehäuse (58) von Figur 8 und 9 die innere Ausbildung des hohlen Gehäuses (58) und verdeutlichen auch schematisch die Ausbildung der vom Gehäuse (58) getrennt dargestellten Platine (70) und ihrer Komponenten.

Abwandlungen der gezeigten beschriebenen Ausführungsformen sind in verschiedener Weise möglich. Insbesondere können die vorbeschriebenen Ausführungsformen und die genannten Abwandlungen im Rahmen der Ansprüche beliebig miteinander kombiniert und ggf. auch vertauscht werden.

### BEZUGSZEICHENLISTE

- 1: Fahrzeuganhänger
- 2: Zugfahrzeug
- 3: Betriebseinrichtung
- 4: Rangiereinrichtung
- 5: Chassis
- 6: Deichsel
- 7: Kupplung
- 8: Achsanordnung
- 9: Anhängerachse, Achskörper
- 9': Anhängerachse, Achskörper
- 10: Anhängerrad
- 10': Anhängerrad
- 11: Aufbau
- 12: Gehäuse
- 12': Boden
- 13: Stromzuleitung von Zugfahrzeug
- 14: Stromzuleitung von extern
- 15: Stützenanordnung
- 16: Nebenaggregat
- 17: Überwachungseinrichtung
- 18: Erfassungseinrichtung für Betriebszustände
- 19: Rangierantrieb
- 19': Rangierantrieb
- 20: Rangierantrieb
- 20': Rangierantrieb
- 21: Bedieneinrichtung, Fernbedienung
- 22: Stromversorgung
- 23: Steuereinheit
- 24: Sensorik
- 25: Kabelanschluss
- 26: Stromzuführung
- 26': Stromleitung, Stromkabel
- 26": Stromleitung, Stromkabel
- 27: Steuerleitung, Bus-System
- 27': Steuerleitung
- 28: Antriebseinheit
- 29: Antriebsmotor
- 30: Treibmittel, Treibrolle
- 31: Zustelleinrichtung
- 32: Zustellführung
- 33: Zustellantrieb
- 34: Ladegerät 18V
- 35: Ladegerät 18V
- 36: Ladeanschluss
- 37: Versorgungsausgang
- 38: Akku mobil 18V
- 39: Akku mobil 18V
- 40: Aufnahme
- 41: Aufnahme
- 42: Batterie 12V
- 43: Speiseausgang
- 44: Schalter
- 45: Hubstütze hydraulisch
- 46: Aufbaustütze
- 47: Sensorik
- 48: Stromleitung, Stromkabel
- 49: Steuerleitung, Bus-System
- 50: Detektionseinrichtung
- 51: Detektionsmittel steuertechnisch
- 52: Busknoten
- 53: Busknoten
- 54: Detektionsmittel, Beschleunigungssensor
- 55: Bezugsseite, Oberseite
- 55': Anbauseite
- 56: Fahrtrichtung
- 57: Akkuhalter ohne Ladefunktion
- 58: Gehäuse
- 59: Steckaufnahme
- 60: Führungs- und Klemmleiste
- 61: Elektrokontakt
- 62: Auslöser
- 63: Anschluss Akku
- 64: Anschluss weitere Batterie
- 65: Anschluss Rangierantrieb
- 66: Anschluss Rangierantrieb
- 67: Mikroprozessor, Recheneinheit
- 68: Anschluss Steuerleitungen, Busanschluss
- 69: Anschluss Stützenanordnung
- 70: Platine
- 71: Zugang
- 72: Gegenleiste

## Patentansprüche

1. Betriebseinrichtung für einen straßengängigen Fahrzeuganhänger (1) umfassend eine Rangiereinrichtung (4) für den abgekuppelten Fahrzeuganhänger (1), wobei die Rangiereinrichtung (4) mehrere, vorzugsweise zwei oder vier, elektrisch betriebene Rangierantriebe (19,19',20,20') ausgebildet zum Antreiben der Anhängerräder (10,10') umfasst, wobei die Betriebseinrichtung (3) eine gemeinsame, von den Rangierantrieben (19,19',20,20') örtlich getrennte, elektrische Stromversorgung (22) und eine Steuereinheit (23) für die Rangierantriebe (19,19',20,20') umfasst, wobei die Rangierantriebe (19,19',20,20') jeweils einen Kabelanschluss (25) aufweisen, der für den Anschluss einer von der Stromversorgung (22) kommenden externen kabelgebundenen Stromzuführung (26) ausgebildet ist, wobei die Rangierantriebe (19,19',20,20') für einen Betrieb mit einer Gleichspannung von mehr als 12V, insbesondere ca. 18V oder mehr, ausgelegt sind, **dadurch gekennzeichnet, dass**
- die Stromversorgung (22) ein oder mehrere elektrische Ladegeräte (34,35) und/oder ein oder mehrere elektrische Akkuhalter (57) ohne elektrische Ladefunktion umfasst, die jeweils eine elektrisch leitende und einen mechanischen Rückhalt bietende Aufnahme (40,41) für zumindest einen mobilen, lösbar anzuordnenden elektrischen Akku (38,39) aufweisen,
- wobei die ein oder mehreren elektrischen Ladegeräte (34,35) und/oder elektrischen Akkuhalter (57) und Akku(s) (38,39) für eine Gleichspannung von mehr als 12V, insbesondere ca. 18V oder mehr, ausgelegt sind und
- wobei die ein oder mehreren elektrischen Ladegeräte (34,35) und/oder elektrischen Akkuhalter (57) zumindest einen Versorgungsausgang (37) für eine kabelgebundene Stromzuführung (26) zu den Rangierantrieben (19,19',20,20') aufweisen und die ein oder mehreren elektrischen Ladegeräte (34,35) einen Ladeanschluss (36) für eine anhängerseitige Stromzuleitung (13,14) aufweisen,
- wobei die Steuereinheit (23) dazu ausgebildet ist, die kabelgebundene Stromzuführung (26) von der Stromversorgung (22) zu den Rangierantrieben (19,19',20,20') zu beschalten und die Rangierantriebe (19,19',20,20') zu steuern.

2. Betriebseinrichtung nach Anspruch 1, **dadurch gekennzeichnet, dass** die Aufnahme (40,41) als Steckaufnahme (59) mit Führungs- und Klemmleisten (60) sowie Elektrokontakten (61) ausgebildet ist.

3. Betriebseinrichtung nach Anspruch 1 oder 2, **dadurch gekennzeichnet, dass** die Steuereinheit (23) bevorzugt als elektrische und speicherprogrammierbare Steuereinheit, insbesondere mit einem Mikroprozessor, Daten- und Programmspeichern sowie Input- und Output-Schnittstellen ausgebildet ist, wobei die Steuereinheit (23) getrennt von der Stromversorgung (22) angeordnet ist oder in die Stromversorgung (22), insbesondere in ein elektrisches Ladegerät (34,35) und/oder einen elektrischen Akkuhalter (57), integriert ist.

4. Betriebseinrichtung nach Anspruch 1, 2 oder 3, **dadurch gekennzeichnet, dass** die Steuereinheit (23) mehrere getrennte elektrische Anschlüsse (63,64) für die ein oder mehreren elektrischen Ladegeräte (34,35) und/oder die ein oder mehreren elektrischen Akkuhalter (57) und für eine weitere, bevorzugt wiederaufbladbare, elektrische Batterie (42) aufweist.

5. Betriebseinrichtung nach einem der vorhergehenden Ansprüche, **dadurch gekennzeichnet, dass** die Stromzuführung (26) kabelgebundene Stromleitungen (26',26") umfasst, die bevorzugt Bestandteil der Betriebseinrichtung (3) sind, wobei bevorzugt die Steuereinheit (23) über kabelgebundene Stromleitungen (26') mit den Rangierantrieben (19,19',20,20') versorgungstechnisch verbunden ist und wobei bevorzugt die ein oder mehreren elektrischen Ladegeräte (34,35) und/oder die ein oder mehrere elektrischen Akkuhalter (57) mit der Steuereinheit (23) über eine kabelgebundene Stromleitung (26") versorgungstechnisch verbunden ist/sind.

6. Betriebseinrichtung nach einem der vorhergehenden Ansprüche, **dadurch gekennzeichnet, dass** die Stromversorgung (22) eine weitere, bevorzugt wiederaufladbare elektrische Batterie (42), insbesondere eine 12V-Batterie, umfasst, wobei die weitere elektrische Batterie (42) mit der Steuereinheit (23) über eine kabelgebundene Stromleitung (26") versorgungstechnisch verbunden ist.

7. Betriebseinrichtung nach einem der vorhergehenden Ansprüche, **dadurch gekennzeichnet, dass** die Steuereinheit (23) dazu ausgebildet ist, die elektrischen Rangierantriebe (19,19',20,20') wahlweise mit Strom von den ein oder mehreren elektrischen Ladegeräten (34,35) und/oder elektrischen Akkuhaltern (37) oder von einer ggf. vorhandenen weiteren Batterie (42) zu beaufschlagen.

8. Betriebseinrichtung nach einem der vorhergehenden Ansprüche, **dadurch gekennzeichnet, dass** die Steuereinheit (23) mit den Rangierantrieben (19,19',20,20') durch drahtlose oder drahtgebundene Steuerleitungen (27), insbesondere ein Bus-System, steuertechnisch verbunden ist.

9. Betriebseinrichtung nach Anspruch 1, **dadurch gekennzeichnet, dass** die Betriebseinrichtung (3) eine gesteuert antreibbare Stützenanordnung (15) zur Abstützung des bevorzugt abgekuppelten Fahrzeuganhängers (1) und ggf. ein oder mehrere Nebenaggregate (16) umfasst, die an die elektrische Stromversorgung (22) und an die Steuereinheit (23) angeschlossen sind.

10. Betriebseinrichtung nach einem der Ansprüche 1 bis 9, **dadurch gekennzeichnet, dass** die Betriebseinrichtung (3) eine Detektionseinrichtung (50) umfasst, die dazu ausgebildet ist, in Anbaustellung der Rangierantriebe (19,19',20,20') am Fahrzeuganhänger (1) automatisch die Zahl, Seitenlage und Ausrichtung der einzelnen Rangierantriebe (19,19',20,20') relativ zum jeweils zugeordneten Anhängerrad (10,10') zu detektieren.

11. Betriebseinrichtung nach einem der vorhergehenden Ansprüche, **dadurch gekennzeichnet, dass** die Betriebseinrichtung (3) eine Überwachungseinrichtung (17) aufweist, welche die korrekte Funktion der Betriebseinrichtung (3), insbesondere der Rangiereinrichtung (4) und ggf. der Stützenanordnung (15), sicherstellt, wobei die Überwachungseinrichtung (17) eine Erfassungseinrichtung (18) für Betriebszustände der Betriebseinrichtung (3), insbesondere der Rangiereinrichtung (4) und ggf. der Stützenanordnung (15), umfasst.

12. Betriebseinrichtung nach einem der vorhergehenden Ansprüche, **dadurch gekennzeichnet, dass** die Betriebseinrichtung (3) eine bevorzugt mobile Bedieneinrichtung (21) umfasst, insbesondere eine dedizierte Fernbedienung oder eine Steuer-App für ein Smartphone, Tablet oder dgl.

13. Straßengängiger Fahrzeuganhänger (1) umfassend ein Chassis (5), eine Deichsel (6), einen Aufbau (11), eine Achsanordnung (8) und eine Betriebseinrichtung (3) mit einer Rangiereinrichtung (4) für den abgekuppelten Fahrzeuganhänger (1), wobei die Rangiereinrichtung (4) mehrere, vorzugsweise zwei oder vier, elektrisch betriebene Rangierantriebe (19,19',20,20') ausgebildet zum Antreiben der Anhängerräder (10) umfasst, wobei die Betriebseinrichtung (3) eine kabelgebundene, von den Rangierantrieben (19,19',20,20') örtlich getrennte, gemeinsame elektrische Stromversorgung (22) und eine Steuereinheit (23) für die Rangierantriebe (19,19',20,20') umfasst, wobei die Rangierantriebe (19,19',20,20') jeweils einen Kabelanschluss (25) aufweisen, an dem eine von der Stromversorgung (22) kommenden externe kabelgebundene Stromzuführung (26) angeschlossen ist, **dadurch**
**gekennzeichnet, dass** die Betriebseinrichtung (3) nach einem der Ansprüche 1 bis 12 ausgebildet ist.

14. Fahrzeuganhänger nach Anspruch 13, **dadurch gekennzeichnet, dass** die Stromversorgung (22) und bevorzugt die Steuereinheit (23) im Aufbau (11), insbesondere in dessen schützenden Gehäuse (12) angeordnet ist/sind, wobei die Rangierantriebe (19,19',20,20') außerhalb des Aufbaus (11), angeordnet sind und mit der Steuereinheit (23) über ggf. drahtgebundene Steuerleitungen (27) steuertechnisch und über kabelgebundene Stromleitungen (26') versorgungstechnisch verbunden sind, wobei die Stromleitungen (26') und ggf. die Steuerleitungen (27) aus dem Aufbau (11) heraus zu den Rangierantrieben (19,19',20,20') geführt sind.

15. Verfahren zum Betrieb eines straßengängigen Fahrzeuganhängers (1) umfassend eine Rangiereinrichtung (4) für den abgekuppelten Fahrzeuganhänger (1), wobei die Rangiereinrichtung (4) mehrere, vorzugsweise zwei oder vier, elektrisch betriebene, die Anhängerräder (1010,') antreibende Rangierantriebe (19,19',20,20') umfasst, wobei die Betriebseinrichtung (3) eine gemeinsame, von den Rangierantrieben (19,19',20,20') örtlich getrennte, elektrische Stromversorgung (22) und eine Steuereinheit (23) für die Rangierantriebe (19,19',20,20') umfasst, wobei die Rangierantriebe (19,19',20,20') jeweils einen Kabelanschluss (25) aufweisen, an dem eine von der Stromversorgung (22) kommenden externe kabelgebundene Stromzuführung (26) angeschlossen ist, wobei die Rangierantriebe (19,19',20,20') für einen Betrieb mit einer Gleichspannung von mehr als 12V, insbesondere ca. 18V oder mehr, ausgelegt sind, **dadurch gekennzeichnet, dass**
- die Stromversorgung (22) ein oder mehrere elektrische Ladegeräte (34,35) und/oder elektrische Akkuhalter (57) ohne elektrische Ladefunktion umfasst, die jeweils eine elektrisch leitende und einen mechanischen Rückhalt bietende Aufnahme (40,41) für zumindest einen mobilen, lösbar anzuordnenden elektrischen Akku (38,39) aufweisen,
- wobei die ein oder mehreren elektrischen Ladegeräte (34,35) und/oder elektrischen Akkuhalter (57) und Akku(s) (38,39) analog für eine Gleichspannung von mehr als 12V, insbesondere ca. 18V oder mehr, ausgelegt sind und
- wobei die ein oder mehreren elektrischen Ladegeräte (34,35) und/oder elektrischen Akkuhalter (57) zumindest einen Versorgungsausgang (37) für eine kabelgebundene Stromzuführung (26) zu den Rangierantrieben (19,19',20,20') aufweisen und die ein oder mehreren elektrischen Ladegeräte (34,35) einen Ladeanschluss (36) für eine anhängerseitige Stromzuleitung (13,14) aufweisen,
- wobei die Steuereinheit (23) die kabelgebundene Stromzuführung (26) von der Stromversorgung (22) zu den Rangierantrieben (19,19',20,20') beschaltet und die Rangierantriebe (19,19',20,20') steuert.

16. Verfahren nach Anspruch 15, **dadurch gekennzeichnet, dass** die korrekte Funktion der Betriebseinrichtung (3), insbesondere der Rangiereinrichtung (4) und ggf. der Stützenanordnung (15), mittels einer Überwachungseinrichtung (17), sichergestellt wird, wobei mittels einer Erfassungseinrichtung (18) der Überwachungseinrichtung (17) Betriebszustände der Betriebseinrichtung (3), insbesondere der Rangiereinrichtung (4) und ggf. der Stützenanordnung (15), erfasst werden.

17. Verfahren nach Anspruch 15 oder 16, **dadurch gekennzeichnet, dass** mittels einer Detektionseinrichtung (50) in Anbaustellung der Rangierantriebe (19,19',20,20') am Fahrzeuganhänger (1) automatisch die Zahl, Seitenlage und Ausrichtung der einzelnen Rangierantriebe (19,19',20,20') relativ zum jeweils zugeordneten Anhängerrad (10,10') detektiert werden.
